(19) Europäisches Patentamt
European Patent Office
Office européen des brevets

(11) **EP 3 491 432 B1**

(12) **EUROPEAN PATENT SPECIFICATION**

(45) Date of publication and mention
of the grant of the patent:
**23.12.2020 Bulletin 2020/52**

(21) Application number: **17837454.2**

(22) Date of filing: **31.07.2017**

(51) Int Cl.:
*G02B 5/02* (2006.01)    *G02B 5/04* (2006.01)
*G02B 5/12* (2006.01)    *B32B 3/30* (2006.01)
*F21S 11/00* (2006.01)   *F21V 31/00* (2006.01)
*F21V 5/00* (2018.01)    *B32B 7/12* (2006.01)
*B32B 23/08* (2006.01)   *B32B 23/20* (2006.01)
*B32B 27/08* (2006.01)   *B32B 27/20* (2006.01)
*B32B 27/22* (2006.01)   *B32B 7/06* (2019.01)
*B32B 27/28* (2006.01)   *B32B 27/30* (2006.01)
*B32B 27/32* (2006.01)   *B32B 27/34* (2006.01)
*B32B 27/36* (2006.01)   *B32B 27/40* (2006.01)

(86) International application number:
**PCT/US2017/044579**

(87) International publication number:
**WO 2018/026675 (08.02.2018 Gazette 2018/06)**

(54) **LIGHT REDIRECTING CONSTRUCTIONS AND METHODS FOR SEALING EDGES THEREOF**

LICHTUMLEITUNGSKONSTRUKTIONEN UND VERFAHREN ZUM ABDICHTEN DER RÄNDER DAVON

STRUCTURES DE REDIRECTION DE LUMIÈRE ET PROCÉDÉS POUR SCELLER LES BORDS DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2016 US 201662369157 P**

(43) Date of publication of application:
**05.06.2019 Bulletin 2019/23**

(73) Proprietor: **3M Innovative Properties Company**
**Saint Paul, Minnesota 55133-3427 (US)**

(72) Inventors:
• **PADIYATH, Raghunath**
**Saint Paul**
**Minnesota 55133-3427 (US)**
• **ASKELAND, Eric L.**
**Saint Paul**
**Minnesota 55133-3427 (US)**
• **REED, John F.**
**Saint Paul**
**Minnesota 55133-3427 (US)**

• **LE BLANC, Shannon S.**
**Saint Paul**
**Minnesota 55133-3427 (US)**
• **AHO, Erik A.**
**Saint Paul**
**Minnesota 55133-3427 (US)**
• **THERY, Ronald K.**
**Saint Paul**
**Minnesota 55133-3427 (US)**
• **NIRMAL, Manoj**
**Saint Paul**
**Minnesota 55133-3427 (US)**

(74) Representative: **Vossius & Partner**
**Patentanwälte Rechtsanwälte mbB**
**Siebertstrasse 3**
**81675 München (DE)**

(56) References cited:
**WO-A1-2016/064595    WO-A1-2016/064669**
**WO-A1-2016/088823    WO-A1-2017/004003**
**WO-A1-2017/116984    US-A- 5 743 981**

## Description

The present disclosure relates to articles and methods of sealing light redirecting film constructions comprising a microstructured optical film, such as a daylight redirecting film, bonded to another film. This type of assembly may serve various purposes. For example, the assembly may protect the microstructured optical film, provide additional functionality, such as diffusion or infrared reflection, and/or facilitate attachment of the microstructured optical film to a mounting surface, such as a glazing or window pane. The methods for sealing the edge of a light redirecting construction inhibit ingress of water and other contaminants during the film installation and afterwards during its regular use.

## Background

A variety of approaches are used to reduce energy consumption in buildings. Among those approaches is the more efficient use of sunlight to provide lighting inside buildings. One technique for supplying light inside of buildings, such as in offices, residential buildings, etc. is the redirection of incoming sunlight. Because sunlight enters windows at a downward angle, much of this light produces glare and is not useful in illuminating a room. However, if the incoming downward light rays can be redirected upward such that they strike the ceiling, the light can be more usefully employed in lighting the room.

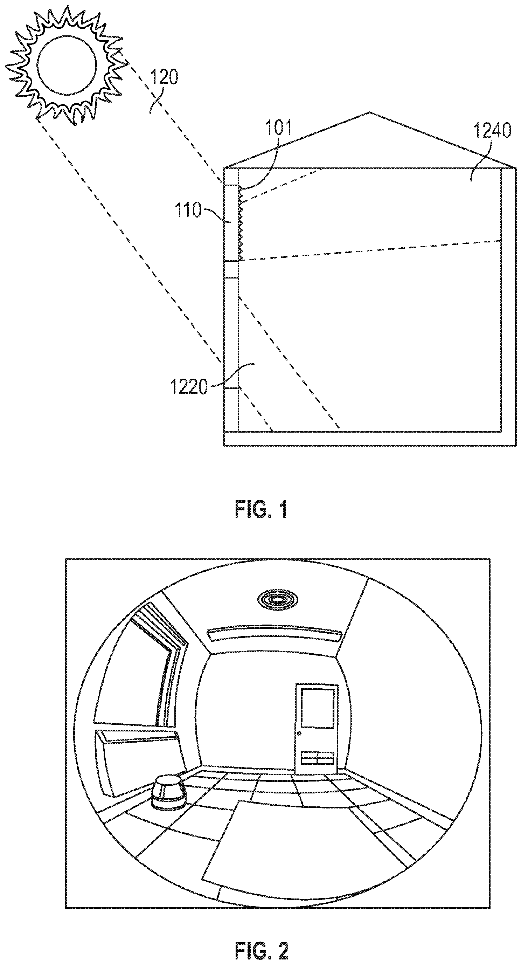

Light Redirection Films (LRFs), provide natural lighting by redirecting incoming sunlight upward, onto the ceiling. This can lead to significant energy savings by reducing the need for artificial lights. Examples for such LRFs are disclosed in PCT application titled "Light redirecting film constructions and methods of making same" published as WO 2016/064595 A1, PCT application titled "Daylighting device" published as WO 2016/088823 A1. LRFs can consist of linear optical microstructures that reflect incoming sunlight onto the ceiling. LRFs are typically installed on the upper clerestory section of windows 7' and above. A typical configuration is shown on Figure 1, where an LRF 101 on a window 110 redirects sunlight 120 upward as deflected (reflected or refracted) light 124.

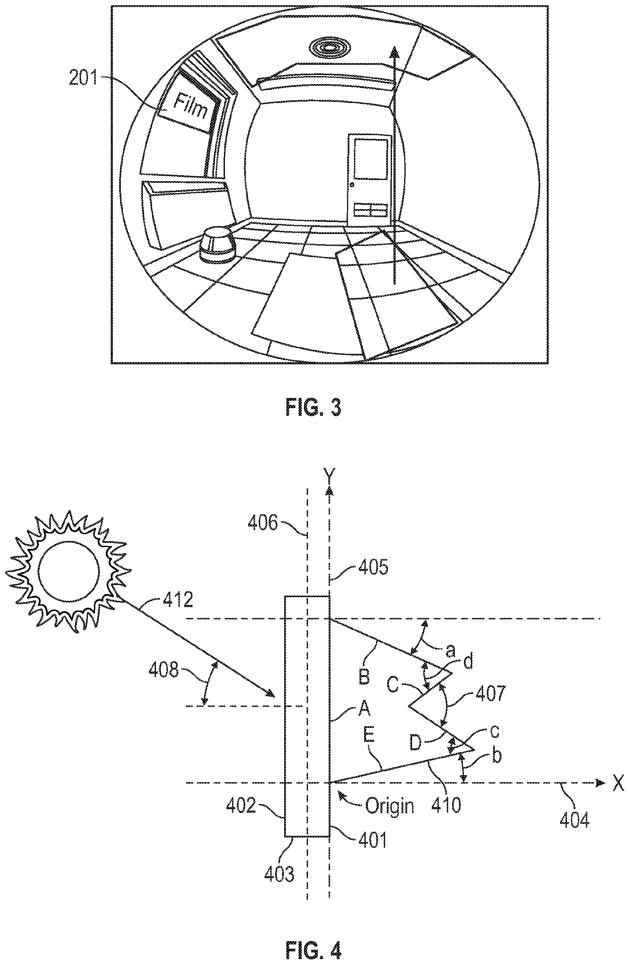

Sunlight that would normally land on the floor can be used to provide natural lighting by using suitable constructions involving daylight redirecting films. A comparison of Figure 2 (no LRF) with Figure 3 (LRF present) shows an example of the amount of light that can be redirected from the floor to the ceiling by the use of a LRF 201.

Buildings (residential & commercial) account for about 40% of all energy consumed and lighting represents about 30% of that energy. Substituting even a fraction of artificial lighting with natural light can yield significant energy savings. The Illuminating Engineering Society of North America (IES) has developed a comprehensive daylight illuminance metric, named spatial Daylight Autonomy or sDA that characterizes the efficacy of daylighting systems. An extensive study conducted at several Department of Defense sites across the U.S. demonstrated that installation of 3M DRF increases sDA values. In addition to energy savings, daylighting has soft benefits related to increased worker productivity, elevated test scores, and improved mood and energy.

A problem that is frequently encountered when an area is illuminated using natural daylight is how to spread the light adequately and evenly. In the case, for example, in which an area is being illuminated within a building, there will usually be parts of that area that are less well-lit than others, and also some locations where the users of the building are troubled by glare from the light source. One solution to address this problem is the use of a diffuser.

In general, microstructured light redirecting films may be fragile under certain circumstances because the microstructured features may be subject to mechanical damage and/or chemical damage (e.g. window cleaners). One challenge when attempting to protect the microstructured elements in a LRF is that the lamination process to add a cover or protective layer can cause damage to those microstructured elements. The same challenge is present when attempting to laminate any other type of functional layer or film, such as a diffuser, to a LRF on the side of the microstructured elements. Additionally, the presence of an additional layer next to the LRF may also modify its optical properties and significantly degrade or modify its light redirecting properties.

In general, the LRF is applied to a glazing, such as a glass window, using standard installation techniques. Typically the installation involves spraying the window and the film with water, positioning the film on the glazing surface, and removing the excess water between the film and the glazing surface, usually with the aid of a squeegee. However, certain light redirecting constructions have open channels between the light redirecting film and the cover layer. The inventors noticed that during the steps of removing excess water or spraying the film or glazing, water can ingress into those channels in the film. In the case of light redirecting films, such water ingress can compromise not only the aesthetic appearance of the film but also its light redirecting properties. Although the water pulled into the channels may dry out over time, it can nonetheless leave more lasting effects on the film, such as a permanent stain or can even compromise the integrity of the construction and lead to delamination. Similar problems can arise during normal use of the film, such as when the glazing becomes colder than the surrounding air and water condenses on the film. When condensation occurs on the edges of the film, or when condensed water travels to the edges of the film, it can ingress into the open film channels.

Capillary rise of a fluid in a tube of radius r is given by Jurin's law:

$$H = 2\frac{\gamma Cos\theta}{\rho g r}$$

Where, $\gamma$ is the fluid surface tension, g is the gravitational constant, $\rho$ is the fluid density and $\theta$ is the contact angle. In a non-circular cross-section, r may be taken as the half of the equivalent diameter as defined by one of the many standard methods such as sieve diameter, Martin's diameter, Feret's diameter, etc. As evident from the above equation, the capillary effect becomes significant as the equivalent radius decreases. Furthermore, it is well known that there are several non-linear dynamic regimes during the capillary rise prior to reaching the steady state height as predicted by Jurin's law. Due to the dynamic nature of the capillary rise and small equivalent diameter (or radius) used in exemplified instant invention, some variability was observed in the measurement of water ingress.

Therefore, there is a need to prevent or reduce the water ingress from the edges in window films comprising microstructured films. One of the goals of the present disclosure is to provide a means for depositing sealant material along the edge of the film that reduces the ingress of water during or after application to with respect to a construction that lacks the sealant.

## Summary

The present invention provides a method for reducing ingress of water into an edge of a light redirecting construction according to claim 1. The present disclosure is directed, inter alia, to methods of reducing water ingress into channels on the edge of film constructions comprising a microstructured optical film, such as a light redirecting film, bonded to another film (a second optical film). The present disclosure is not limited to reducing water ingress into film constructions having a light redirecting film. However, for simplicity, the disclosure will use a light redirecting film as an example of the type of microstructured optical film that can be sealed by the methods taught herein. The inventors envision that other microstructured optical films different from light redirecting films that have been bonded to a second optical film (also referred to in this disclosure as a cover film) can be used in the instant methods, such as retro-reflective graphic art films, signages, and such.

The methods of the present disclosure comprise, in their most general sense, providing a microstructured optical construction and depositing or applying a sealant on at least a portion of an edge of the microstructured optical construction.

In some embodiments, film constructions that can be sealed with methods of the present disclosure include light management film constructions comprising two films: a) a first optical film having a first major surface and a second major surface opposite the first major surface, wherein the first major surface comprises a microstructured surface comprising an ordered arrangement of a plurality of microstructured prismatic elements, and b) a cover film having a first major surface and a second major surface opposite the first major surface, the second major surface disposed adjacent to and making contact with and bonded to one or more of the microstructured prismatic elements of the first major structured surface of the first optical film. A cross section of a microstructured prismatic element comprises two or more peaks within the same microstructure.

The first major surface of the first optical film and second major surface of the cover film define an enclosed volume partially occupied by an adhesive layer and by the microstructured prismatic elements on the first major surface of the first optical film. That volume defines the channels that can be sealed (either fully or partially) in order to reduce the ingress of water into the microstructured optical construction (e.g., a light redirecting construction). The volume in those channels also defines one or more optically active areas wherein a first material immediately adjacent to the microstructured prismatic elements, such as air or any other synthetic alternatives (e.g., aerogel), has a difference in refractive index (low with respect to the microstructured prismatic elements) that, in the case of light redirecting films, allows the microstructured prismatic elements to redirect light. The difference in refractive index between the first material (e.g., air) and the microstructured prismatic elements allows redirection of the incident light. However, if those channels contain water or any other solution or material with an unsuitable refractive index, then the optical properties of the microstructured optical construction in those portions can be adversely affected.

As mentioned above, the channels are bounded, on a first major surface, by a second material, typically the adhesive used to bond the first optical film (or microstructured optical film) to the cover film. The channels are bounded on the second major surface by the microstructured prismatic elements of the microstructured optical film. The presence of the adhesive immediately adjacent the microstructured prismatic elements reduces the refraction in the portion of the microstructured prismatic element that is in contact with the adhesive if the refractive index of the adhesive is similar to the refractive index of the microstructured prismatic elements.

In one embodiment, film constructions that can be used in the methods of the present disclosure include those where the first optical film and the cover film are bonded via the adhesive layer when certain portions of the microstructured prismatic elements (e.g., the tip of one or more of the peaks) on the first optical film penetrate the adhesive layer. Partial, as opposed to full, penetration of the tips (e.g., peaks) allows the presence of a low index interface (e.g., air or low index synthetic material) for the microstructured prismatic elements to refract light.

In some embodiments, the sealant used on the edge of the microstructured optical construction is chosen from solvent-based adhesives, hot-melt adhesives, waxes, pressure sensitive adhesive tapes, cyanoacrylate (moisture curing) adhesives, epoxy adhesives, silicone polymers, thermoplastic polymers, and thermoset adhesives. In other embodiments, the sealant is chosen from solvent-based adhesives, hot-melt adhesives, waxes, pressure sensitive adhesive tapes, cyanoacrylate (moisture curing) adhesives, epoxy adhesives. Yet in other embodiments, the sealant is chosen from solvent-based adhesives and waxes.

In some embodiments, the adhesive used to bind the first optical film to the cover film comprises a plurality of diffusing agents, such as particles or beads. The particles can include, for example, silica, alumina, $TiO_2$, or zirconia micro or nanoparticles to scatter (diffuse) the light. As an alternate embodiment, spherical beads can be added to the adhesive. If the beads are matched in refractive index to the adhesive, then the beads will be transparent, but they can cause a rough surface which can generate haze and reduce clarity. For example, PMMA beads can be added to an acrylate adhesive of similar refractive index. In some embodiments, the particles have a mean diameter in a range from 0.1 to 100 microns, or 0.5 to 50 microns, or 0.7 to 20 microns. In illustrative embodiments, the particles can be "surface modified" such that the particles provide a stable dispersion in which the particles do not agglomerate after standing for a period of time, such as 24 hours, under ambient conditions.

In one embodiment, the present disclosure is directed to a method for reducing ingress of water into an edge of a light redirecting construction comprising:

- providing a light redirecting construction having a first major surface and a second major surface opposite the first major surface, and

- depositing a sealant on at least a portion of an edge of the light redirecting construction, wherein the light redirecting construction comprises:

    ◦ a light redirecting film comprising a plurality of microstructured prismatic elements, having a first major surface and a second major surface opposite the first major surface

    ◦ an adhesive layer comprising an adhesive, wherein the adhesive layer has a first major surface and a second major surface opposite the first major surface,

    ◦ a cover film having a first major surface and a second major surface opposite the first major surface,

    wherein the microstructured prismatic elements penetrate at least partially into the first major surface of the adhesive layer,
    wherein the second major surface of the adhesive layer is immediately adjacent to the first major surface of the cover film
    wherein the light redirecting construction has at least one channel defined by the volume enclosed between the surface of the microstructured prismatic elements and the adhesive layer wherein the at least one channel extends from at least one edge of the light redirecting construction inwards.

In general, and not to be limited by theory, the purpose of the sealant is to reduce the cross sectional area of the channels in the microstructured optical construction so that the ingress of water or a solution by capillary into the channel is decreased. It is not necessary to completely seal the channels in order to reduce water ingress. In some embodiments, the sealant covers at least 50% of the cross sectional area of the channel. In other embodiments, the sealant covers at least 75%, or 80%, or 90%, or 95%, or 99%, or even 100% of the cross sectional area of the channel.

In other embodiments, the present disclosure is directed to a method for reducing ingress of water into an edge of a light redirecting construction where the light redirecting construction comprises:

- a light redirecting film having a first major surface and a second major surface opposite the first major surface,

    ◦ wherein the first major surface of the light redirecting film comprises a plurality of microstructured prismatic elements,

    ◦ wherein one or more of the microstructured prismatic elements have a first peak and a second peak,

    ◦ wherein the first peak has a height H1 and the second peak has a height H2,

○ wherein H3 is H1 - H2, and H3 is equal or greater than 1 micron,

- an adhesive layer comprising an adhesive, wherein the adhesive layer has a first major surface and a second major surface opposite the first major surface,
- a cover film having a first major surface and a second major surface opposite the first major surface,

wherein the first peak of one or more of the microstructured prismatic elements penetrates at least partially into the first major surface of the adhesive layer,
wherein the second major surface of the adhesive layer is adjacent to the first major surface of the cover film.

In other embodiments, the film construction used in the methods of the present disclosure comprises:

- a light redirecting film having a first major surface and a second major surface opposite the first major surface,

    ○ wherein the first major surface of the light redirecting film comprises a plurality of microstructured prismatic elements,

    ○ wherein one or more of the microstructured prismatic elements have a first peak and a second peak,

    ○ wherein the first peak has a height H1 and the second peak has a height H2,

    ○ wherein H3 is H1 - H2, and H3 is from 1 microns to 8 microns,

- an adhesive layer comprising an adhesive, wherein the adhesive layer has a first major surface and a second major surface opposite the first major surface,
- a cover film having a first major surface and a second major surface opposite the first major surface,
- a diffusion layer,

wherein when the film construction is in a vertical position, the first peak of the microstructured prismatic element is positionally located above the second peak,
wherein the first peak has an apex angle B1 and the second peak has an apex angle B2, and wherein B1 < B2,
wherein the first peak of one or more of the microstructured prismatic elements penetrates at least partially into the first major surface of the adhesive layer,
wherein the first major surface of the light redirecting film is bonded to the first major surface of the adhesive layer,
wherein the second major surface of the adhesive layer is bonded to the first major surface of the cover film.

In other embodiments, the present disclosure is directed to methods of installing a microstructured optical construction, such as a light redirecting construction, on a glazing, such as a glass window, wherein at least a portion of an edge of the microstructured optical construction has been treated with a sealant (resulting in at least partial blocking of the edge channels in the microstructured optical construction.

All scientific and technical terms used herein have meanings commonly used in the art unless otherwise specified. The definitions provided herein are to facilitate understanding of certain terms used frequently in this application and are not meant to exclude a reasonable interpretation of those terms in the context of the present disclosure.

Unless otherwise indicated, all numbers in the description and the claims expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The numerical values in the specific examples are reported as precisely as possible. Any numerical value, however, inherently contains certain errors necessarily resulting from the standard deviations found in their respective testing measurements.

The recitation of numerical ranges by endpoints includes all numbers subsumed within that range (e.g. a range from 1 to 5 includes, for instance, 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

The term "adhesive" as used herein refers to polymeric compositions useful to adhere together two components (adherents).

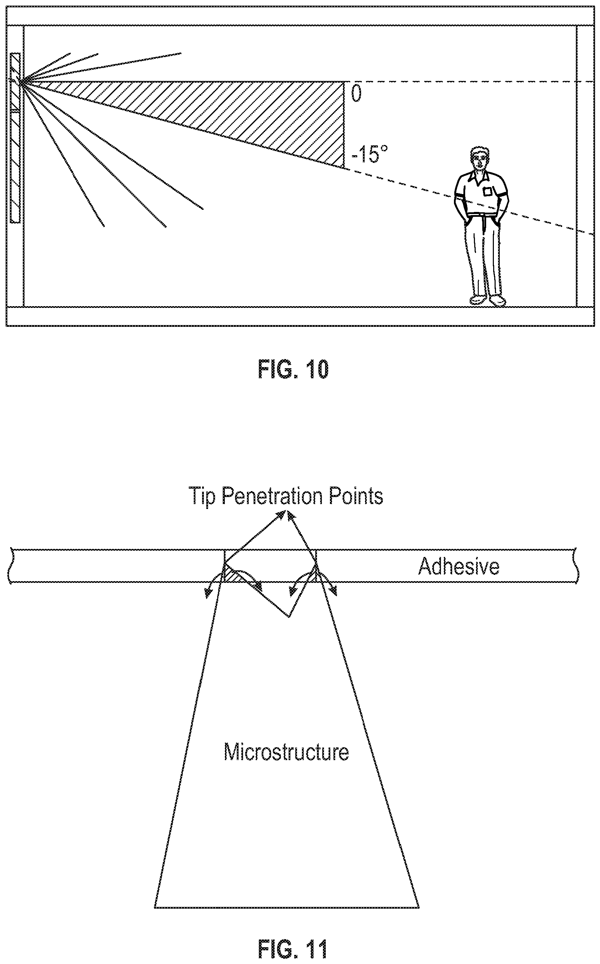

The term "bonded" as used herein refers to an element that has been adhesively attached to another element. Any type of adhesive can be used to bond to elements together. The term "bonded" can be used to describe adhesive attachment of one element (for example a layer or an individual microstructured prismatic element) to an adhesive or adhesive layer or to another element adhesively attached to the adhesive or adhesive layer. For example, in Figure 11, the microstructured prismatic element (or in general terms the film comprising the microstructured prismatic element) is bonded (via the tip of each peak) to the adhesive layer, but it can also be said that the microstructured prismatic element (or the film) is bonded to the substrate (e.g., a cover film).

The term "penetrates" or "penetrating" as used herein in the context of a sealant penetrating into a channel refers to the sealant entering the channel a given distance such that once the sealant is cured, set, hardened, etc., the sealant displaces the air (or hydrogel of suitable refractive index) in that portion of the channel and the cross sectional area of the channel is reduced with respect to a cross sectional area of a channel without a sealant.

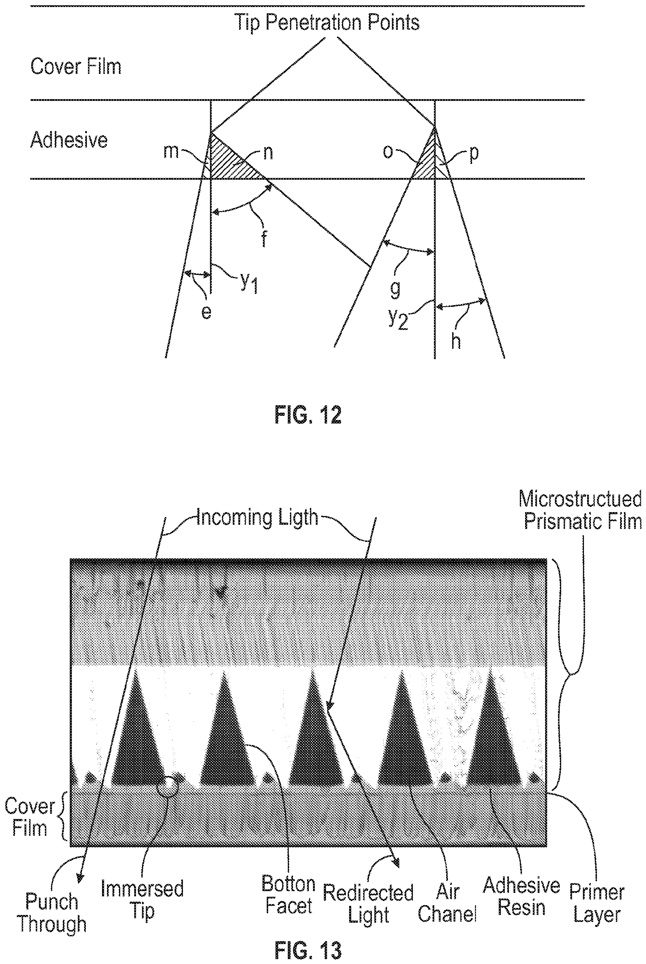

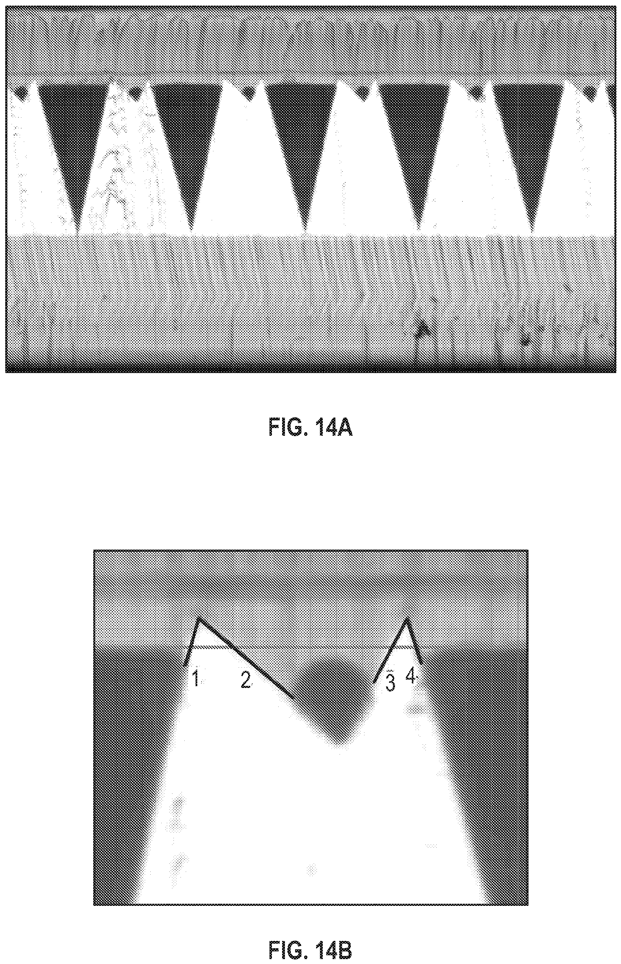

The term "penetrates" or "penetrating" as used herein in the context of a portion of a microstructured prismatic element penetrating an adhesive layer refers to a portion of the microstructured prismatic element being embedded in the adhesive layer, which would allow, once the adhesive is cured, set, hardened, etc., the microstructured prismatic element (or a film containing the microstructured prismatic element) to be bonded to the adhesive layer or to another film or substrate (e.g., a cover film). For example, Figures 12 and 13 show that the tip of each peak of the microstructured prismatic element penetrate the adhesive layer. The portion of the microstructured prismatic element that penetrates the adhesive later is defined as the "bonding portion" of the microstructured prismatic element. Figures 14 A and B show that the microstructured prismatic element (or the light redirecting film) is bonded to the adhesive layer (or to the substrate bonded to the adhesive layer) by means of the tips of the peaks of the microstructured prismatic element having penetrated the adhesive layer, creating surface contact between the prismatic element and the adhesive.

The term "window film adhesive layer" as used herein refers to a layer comprising an adhesive suitable to bond a film to a window or glazing, such as, for example, a pressure sensitive adhesive.

The term "adjacent" as used herein refers to the relative position of two elements, such as layers in a film construction, that are close to each other and may or may not be necessarily in contact with each other and may have one or more layers separating the two elements, as understood by the context in which "adjacent" appears.

The term "immediately adjacent" as used herein refers to the relative position of two elements, such as layers in a film construction, that are in physical contact and immediately next to each other without having any other layers separating the two elements, as understood by the context in which "immediately adjacent" appears. The term "immediately adjacent," however, encompasses situations where one or both elements have been treated with a primer, or whose surface has been modified to affect the properties thereof, such as etching, embossing, etc., or has been modified by surface treatments, such as corona or plasma treatment, etc., that may improve adhesion.

The terms "construction" or "assembly" are used interchangeably in this application when referring to a multilayer film, in which the different layers can be coextruded, laminated, coated one over another, or any combination thereof.

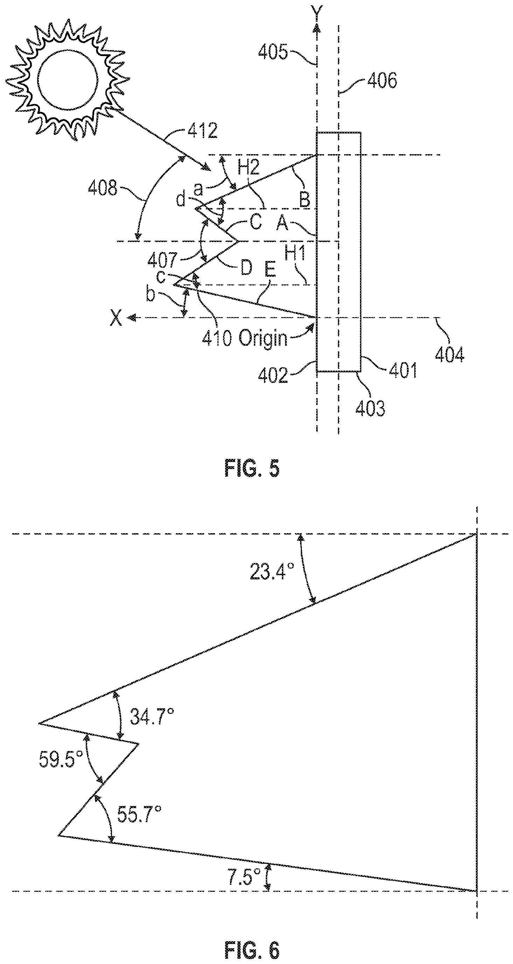

The terms "pitch," "height," "valley angle," "first included angle alpha," "second included angle beta," "apex angle," and "aspect ratio" in connection with a microstructured prismatic element are defined as follows, with reference to Figure 5. The pitch is the length of side A. The height is the height of the tallest peak (HI), which in Figure 5 is the peak formed by sides D and E. That is, the height of the microstructure is the horizontal distance from the Y axis to the apex of the tallest peak, which in Figure 5 is formed by sides D and E. The valley angle is the angle 407. The first included angle, or angle alpha, is the angle "a." The second included angle, or angle beta, is the angle "b." The apex angle is the internal angle of a peak. In Figure 5, the apex angle for the peak formed by sides B and C is the angle "d" and the apex angle for the peak formed by sides D and E is the angle "c." The aspect ratio is the ratio between the height of the microstructured prismatic element and the pitch (HI/A).

The term "optical film" as used herein refers to films that are at least optically transparent and which may have high transmission of visible light, may be optically clear or transluscent and may also produce additional optical effects. Examples of additional optical effects include, for example, light diffusion, light polarization or reflection of certain wavelengths of light. The optical film may be any suitable film that has high optical transmission in the visible light region of the spectrum. An optical film may have a visible light transmission greater than 20%, greater than 50%, or in certain preferred embodiments, greater than 80%. The optical film may be a single layer film or a multilayer film construction.

The term "ordered arrangement" as used herein to describe a plurality of structures, refers to a regular, repeated pattern of structures.

The term "substantially straight" in the context of a side of a microstructured prismatic element as used herein refers to a side that is mostly straight but that could deviate from a straight line due to inaccuracies introduced by manufacturing processes or may intentionally have minor curvature (i.e. large radius) to spread redirected (refract) light.

The term "light redirecting layer" as used herein refers to a layer that comprises microstructured prismatic elements that redirect light.

The term "light redirecting film" or "light directing film" as used herein refers to a film that comprises one or more light redirecting layers and optionally other additional layers, such as substrates or other functional layers. A daylight redirecting film is an example of a light redirecting film. A light redirecting film both transmits light and redirects light. That is, a light redirecting film is not opaque. For instance, a retro-reflective film is not a light redirecting film.

Light redirection, in general, may be called daylight redirection, sunlight redirection, or solar light redirection when the source of light is the sun.

The term "light redirecting construction" as used herein refers to a construction that comprises one or more light redirecting layers or films, a cover film, an adhesive bonding the one or more light redirecting layers or films to a cover film, and optionally other additional layers, coatings, primers, surface treatments. Examples of those additional layers include substrates or other functional layers.

The term "microstructured optical construction" as used herein refers to a construction that comprises one or more optical films comprising microstructured prismatic elements, a second optical film (e.g., a cover film), an adhesive bonding the one or more light redirecting layers or films to a cover film, and optionally other additional layers, coatings, primers, surface treatments. Examples of those additional layers include substrates or other functional layers.

The term "film" as used herein refers, depending on the context, to either a single layer article or to a multilayer construction, where the different layers may have been laminated, co-extruded, coated, or any combination thereof.

The term "microstructured prismatic element," sometimes referred to in the short form as "microstructures," as used herein refers to an engineered optical element, wherein at least 2 dimensions of the features are microscopic, that redirects input light with certain angular characteristics into output light with certain angular characteristics. In certain embodiments, the height of the microstructured prismatic element is less than 1000 microns. A microstructured prismatic element of the present disclosure may comprise a multipeak structure, such as a double peak structure, structures comprising one or more curved facets, or combinations thereof. The microstructured prismatic elements, including all of their physical and optical characteristics (e.g., glare, TIR angles, etc.), are disclosed in PCT application titled "Room-Facing Light Redirecting Film with Reduced Glare," published as WO 2016/064667 and PCT application titled "Sun-Facing Light Redirecting Film with Reduced Glare," published as WO 2016/064621, are hereby incorporated by reference. Examples of microstructured prismatic elements 410 are shown in Figures 4 to 9.

The term "diffusing agent" as used herein refers to features or additives incorporated into an article that increase the angular spread of light passing through the same article, such as, for example, micro beads or nanoparticles.

The term "diffusing layer," "diffusive element," or "diffuser" are interchangeable in this disclosure and as used herein refer to an element in a film construction that provides diffusion of visible light. The diffusive element may be a layer or coating having diffusive properties with respect to visible light or a surface treatment on a layer of the film constructions of the present disclosure that provides diffusive properties to the treated surface.

The term "diffusing film" as used herein refer to a film that comprises a diffusing layer, diffusing element, or a diffuser.

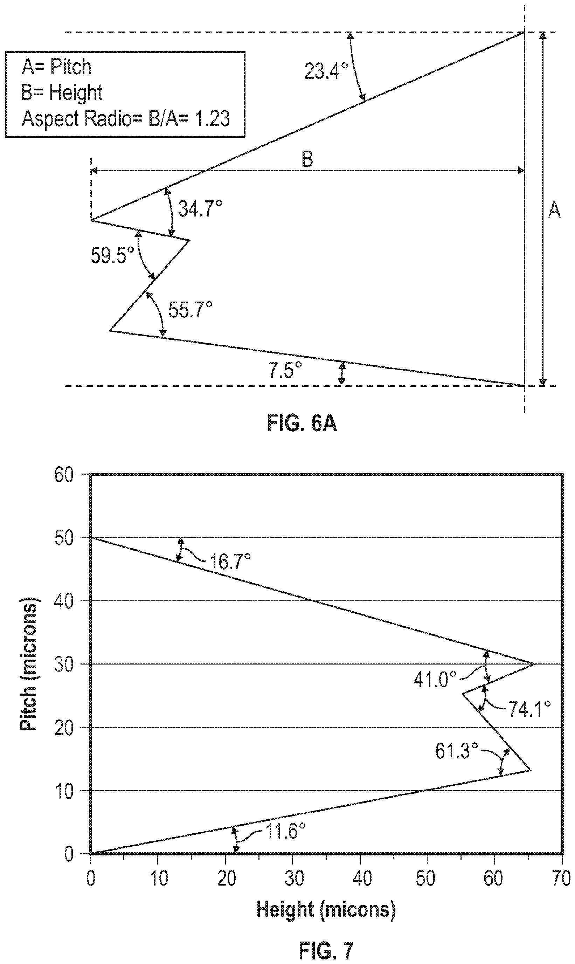

The term "positionally located above" as used herein refers to the relative position of one peak in a microstructured prismatic element with respect to another peak in the same microstructured prismatic element. When the microstructured prismatic element is in a vertical position (see, e.g., microstructured prismatic element 410 in Figures 4 or 5) and its base (side A) is parallel to a vertical axis (e.g., a y-axis) the peak with the apex located at the longest distance from the x-axis in the y-direction is the peak that is positionally located above the other peak. In this case, the location of the x and y axes is chosen so that the microstructured prismatic element is fully in the quadrant where both x and y have positive values. For example, in Figure 4, the peak defined by sides C and D (apex angle "d") is positionally located above the peak defined by sides D and E (apex angle "c"). In Figure 7, the peak with an apex angle of 41.0° is positionally located above the peak with an apex angle of 61.3°.

As used herein, the index of refraction of a material 1 ("RI1") is said to "match" the index of refraction of a material 2 ("RI2") if the value RI1 is within +/- 5% of RI2.

For the following definitions of "room-facing" and "sun-facing," it is assumed that a light redirecting layer has a first major surface and second major surface opposite the first major surface and that the first major surface of the light redirecting film comprises microstructured prismatic elements.

As used herein, the term "room-facing," in the context of a light redirecting film or a construction comprising a light redirecting film, refers to a film or construction where the incident light rays pass through the major surface of the light redirecting film not containing the microstructured prismatic elements before they pass through the major surface that contains the microstructured prismatic elements. In the most typical configuration, when the light redirecting film is located on an exterior window (i.e., when the window faces the exterior of a building), the microstructured prismatic elements in a "room-facing" configuration are oriented facing the interior of the room. However, the term "room-facing," as defined herein can also refer to configurations where the light redirecting film is on a glazing, or other kind of substrate, that does not face the exterior of the building, but is in between two interior areas.

As used herein, the term "sun-facing," in the context of a light redirecting film or a construction comprising a light redirecting film, refers to a film or construction where the incident light rays pass through the major surface of the light redirecting film containing the microstructured prismatic elements before they pass through the other major surface (the major surface not containing the microstructured prismatic elements). In the most typical configuration, when the light redirecting film is located on an exterior window (i.e., when the window faces the exterior of a building), the microstructured prismatic elements in a "sun-facing" configuration are oriented facing the sun. However, the term "sun-facing," as defined herein can also refer to configurations where the light redirecting film is on a glazing that does not face the exterior of the building, but is in between two interior areas.

As used herein, the term "sealing," "seal," or "sealed" when referring to a channel, any other type of cavity, or an edge of an article of this disclosure means blocking the ingress of certain undesired elements such as moisture, water, solutions (either aqueous or comprising an organic-solvent), air, and/or other materials or contaminants.

As used herein, the term "sealant" refers to a material that can seal a channel or any other type of cavity, either partially or fully. A sealant may be applied or deposited on a location and then cured, set, or hardened in place to yield a set sealant.

The term "setting," "curing," or "hardening" as used herein refers to transforming a material from an initial state to its final desired state with different properties such as flow, stiffness, etc., using physical (e.g. temperature, either heating or cooling, or evaporation of solvent), chemical, radiation (e.g. UV or e-beam radiation) means or a combination of means thereof.

The term "edge" as used herein refers to the portion of an article, such as, for example, a film, that spans the space between the two major surfaces of the article. For certain articles, such as films, the edge spans the thickness of the article or film. As used in this disclosure, depositing sealant to the edge of an article, such as a film, does not encompass depositing sealant to any of the two major surfaces of the item, but rather depositing sealant on the edge spanning the thickness of the item.

The term "room temperature" as used herein refers to a temperature of 23 degrees Celsius.

The term "visible light" as used herein refers to refers to radiation in the visible spectrum, which in this disclosure is taken to be from 380 nm to 700 nm.

The term "punch through" as used herein refers to light that transmits directly (or specularly) through the light directing film construction without redirection. Another embodiment of punch through is light that is only redirected at +5 or -5 degrees from specular transmission. Punch through can cause glare, especially with light that is directed shallow and down from the horizontal position that the light impinges on the LRF.

## Brief Description of the Drawings

**Figure 1** is a typical configuration showing the use of a light redirecting film, demonstrating light redirection after the light passed through a room-facing light redirecting layer.

**Figure 2** shows light entering a room through a window without a light redirecting film.

**Figure 3** shows an example of the amount of light that can be redirected from the floor to the ceiling by the use of a light redirecting film construction.

**Figure 4** shows a schematic diagram of a room-facing microstructured prismatic element of the present disclosure.

**Figure 5** shows a schematic diagram of a sun-facing microstructured prismatic element of the present disclosure.

**Figure 6** shows a cross-section of an embodiment of a room-facing microstructured prismatic element.

**Figure 6(a)** shows the room-facing microstructured prismatic element of Figure 6 with the pitch, height, and aspect ratio of 1.23 as indicated.

**Figure 7** shows a cross-section of another embodiment of a room-facing microstructured prismatic element with aspect ratio of 1.31.

**Figure 8** shows a cross-section of another embodiment of a room-facing microstructured prismatic element with aspect ratio of 1.36

**Figure 9** shows a cross-section of another embodiment of a room-facing microstructured prismatic element with aspect ratio of 1.38.

**Figure 10** is a cross-section of a room in which the upper portion of the window is outfitted with a light redirecting film, and shows the fraction of the light that is downwardly deflected as direct glare.

**Figure 11** is a cross-section showing a microstructured prismatic element embedded in a layer of adhesive (0° to -15°).

**Figure 12** is a cross-section showing that the amount of adhesive displaced by a facet of the embedded microstructured prismatic element is proportional to the slope of the facet.

**Figure 13** is a photomicrograph of an embodiment of a light redirecting construction illustrating how light is redirected from a surface of a microstructured prismatic element with an air interface, but light impinging on a microstructured prismatic element at an adhesive interface is not redirected ("punch through").

**Figure 14** shows (a) another view of the embodiment of Figure 13 and (b) the adhesive displaced by the facets of the microstructured prismatic element.

**Figure 15** shows photomicrographs illustrating the effect of adhesive thickness on the depth that microstructured prismatic elements are embedded in the adhesive and corresponding conoscopic plots illustrating increasing "punch through" with increasing adhesive thickness.

**Figure 16** illustrates the effect of microstructured prismatic element immersion in adhesive on "punch through".

**Figure 17** illustrates the effect of microstructured prismatic element immersion in adhesive on peel strength.

**Figure 18** shows two different microstructured prismatic element based on the same initial structure. The top panel shows a microstructured prismatic element where the top peak extended and immersed into adhesive and the bottom panel shows a microstructured prismatic element where the bottom peak extended and immersed into adhesive.

**Figure 19** is a cross-section showing two microstructured prismatic elements having different relative peak heights.

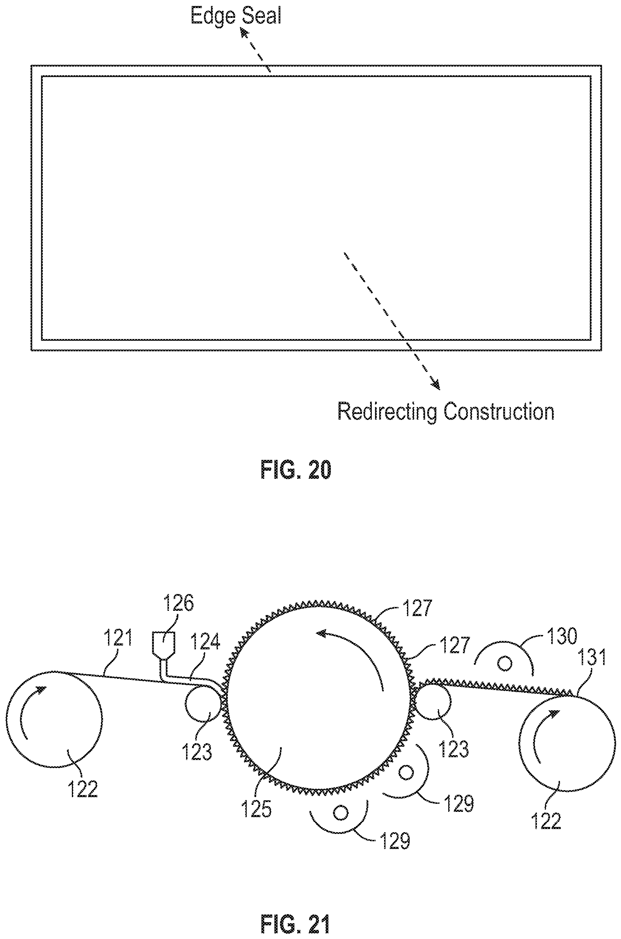

**Figure 20** shows a plano view of an embodiment of a light redirecting film construction that further comprises an edge seal.

**Figure 21** illustrates a process that can be used to make a microstructured prismatic film.

**Figure 22** illustrates a process that can be used to make a light redirecting film construction of the present invention.

**Figure 23** shows a cross-section of another embodiment of a room-facing microstructured prismatic element having three peaks.

**Figure 24** shows a cross-section of another embodiment of a room-facing microstructured prismatic element having curved facets.

**Figure 25** shows a cross-section of another embodiment of a room-facing microstructured prismatic element having a curved facets.

**Figure 26** shows another embodiment of a light redirecting film construction.

**Figure 27** shows another embodiment of a light redirecting film construction.

**Figure 28** shows another embodiment of a light redirecting film construction.

**Figure 29(a)** shows an embodiment of a light redirecting film construction having room-facing microstructured prismatic elements.

**Figure 29(b)** shows an embodiment of a light redirecting film construction having sun-facing microstructured prismatic elements.

**Figure 30** shows another embodiment of a light redirecting film construction.

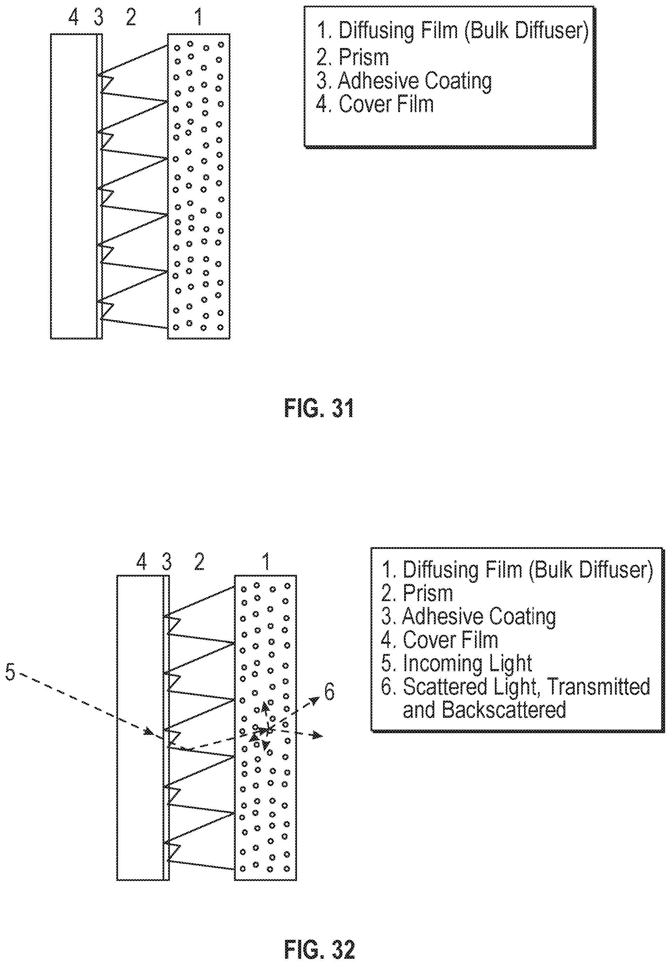

**Figure 31** shows another embodiment of a light redirecting film construction.

**Figure 32** shows another embodiment of a light redirecting film construction.

**Figure 33** shows the effect of adhesive thickness on the amount of direct glare produced as a function of sun elevation angle.

**Figure 34** shows modeled punch-through glare vs. sun elevation angle for the two microstructured prismatic elements described in Figure 18.

**Figure 35** shows the measured color coordinates of two embodiments of the invention relative to a window with no film installed. The length of the lines connecting each point to the original input color (circle) is equivalent to the color shift for each measurement.

**Figure 36** shows a surface view of a daylight redirecting film.

**Figure 37** shows a cross-sectional area of a microstructured optical construction having sealant.

**Figure 38** shows an example of a microstructured optical construction whose edge was not sealed prior to installation.

**Figure 39** shows an example of a microstructured optical construction with edge sealed

## Element Numbers

[0063]

| | |
|---|---|
| 101 | Light Redirecting Film Construction |
| 110 | Window |
| 120 | Sunlight |
| 121 | Cover film |
| 122 | Guiding roller |
| 123 | Nip roller |
| 124 | Resin composition |
| 125 | Patterned tool roll |
| 126 | Coating die |
| 127 | Microstructured tool surface |
| 129 | Radiation source |
| 130 | Radiation source |
| 131 | Film with microstructured prismatic elements |
| 201 | Light Redirecting Film Construction |
| 401 | First major surface of the optical substrate |
| 402 | Second major surface of the optical substrate |
| 403 | Optical substrate |
| 404 | Reference X-axis |
| 405 | Reference Y-axis |
| 406 | Reference plane |
| 407 | Valley angle |
| 408 | Light incidence angle |
| 410 | Microstructured prismatic element |
| 412 | Sunlight |
| 1220 | Sunlight deflected downward |
| 1240 | Sunlight deflected upward |
| 1502 | Guiding roll |
| 1504 | Microstructured prismatic film |
| 1506 | Unwind roll |
| 1508 | Guiding roll |
| 1512 | Unwind roll |
| 1514 | Stripped film |

1516    Cover film
1518    Pinch roller pair
1520    Coater
1522    Adhesive layer
1526    UV lamp
1528    Layered film
1542    Collection Roll
1700    Daylight redirecting construction
1702    Bond lines (for tips of prismatic microstructures)
1704    Edge of daylight redirecting construction (along the thickness of the film, not encompassing any of the major surfaces of the film)
1800    Daylight redirecting construction
1802    Second optical film (cover film)
1804    First optical film (daylight redirecting film)
1806    Sealant in channels
1808    Prismatic microstructures

In the following description, reference is made to the accompanying Figures herein described. In certain cases, the Figures may depict, by way of illustration, several specific embodiments of the present disclosure.

## Detailed Description

In general, the present disclosure relates to methods for sealing an edge of a microstructured optical construction, such as a light redirecting construction, and/or methods for reducing ingress of water into an edge of a microstructured optical construction, such as a light redirecting construction.

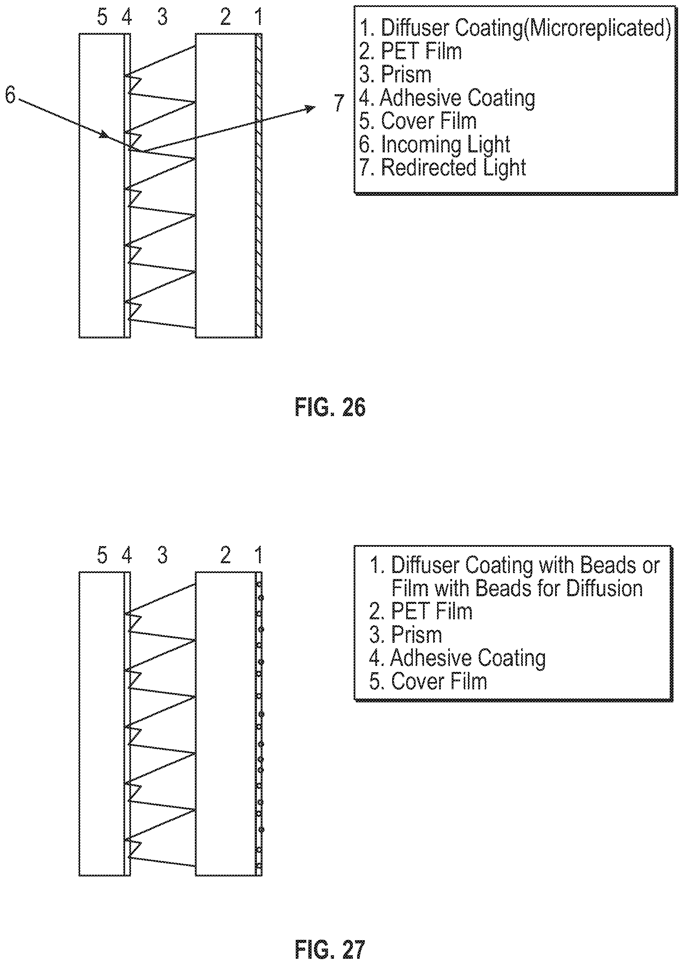

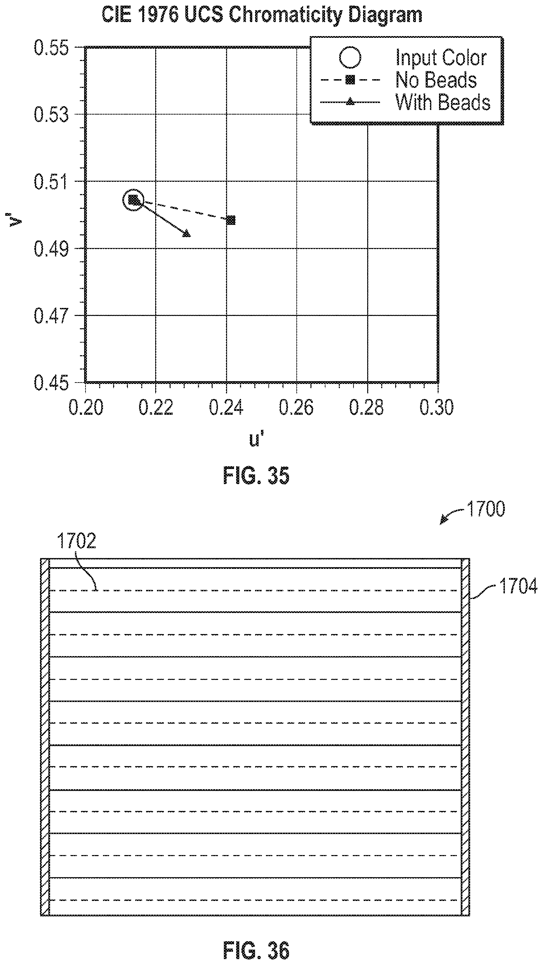

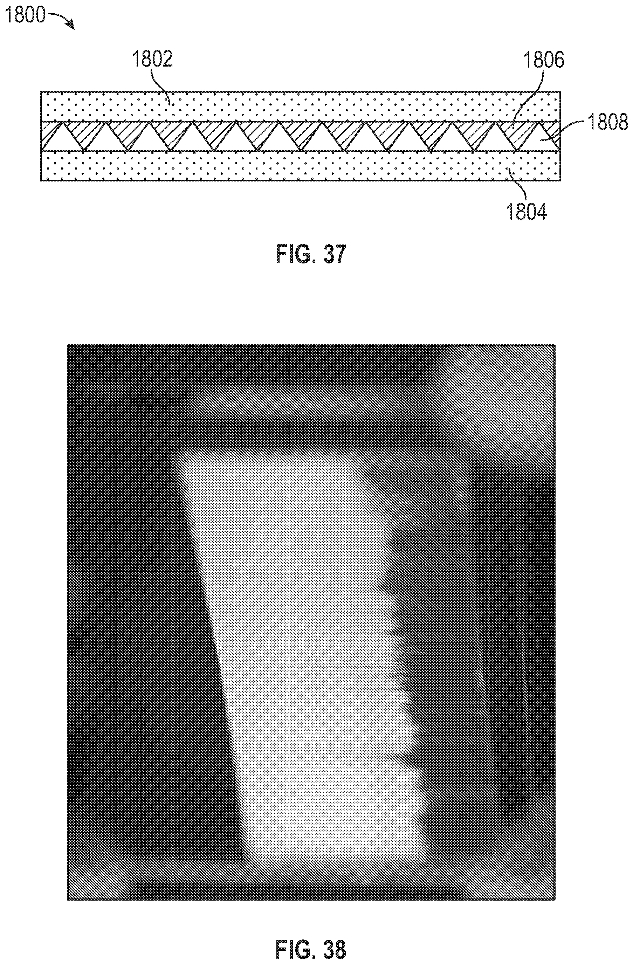

In general, the methods of the present disclosure can be used on film constructions where two films are bonded to each other and at least one of the films comprises a microstructured optical film. A cross-section and surface view of a daylight redirecting construction are shown in Figures 26 and 36, respectively. The daylight redirecting construction (1800) comprises a first optical film (1804, microstructured optical film with a light redirecting microstructures (1808)) and a second optical film (1802). The first optical film has a first surface and a second surface. Prismatic microstructures (1808) are provided on the first surface of the first optical film. The prismatic microstructures are shown schematically as triangles in Figure 37, but the actual prismatic microstructures can have any suitable shape and can have one, two, or more peaks. The adhesive layer bonding the first optical film (1804) and the second optical film (1802) is not shown in Figure 37 to simplify the diagram.

The second optical film has a first surface and a second surface. In some cases, the second optical film may serve as a bulk diffuser or a surface diffuser. In cases where the second optical film is a surface diffuser, the non-diffusing surface is bonded along the tips of the microstructures provided on the first optical film. First and second optical films enclose a volume and form a continuous channel. The shape of the channel may be linear or non-linear.

The dotted lines (1702) in Figure 36 represent the bond line where the tips of the prismatic microstructures (1808, not shown in Figure 36) of first optical film is bonded to the second optical film in a microstructured optical construction (e.g., a daylight redirecting structure) (1700). The shaded region (1704) in Figure 37 represents the area where the sealant (1806) is applied or deposited to reduce the ingress of water (sealant deposited along the area spanning the thickness of the film, not depositing on any of the major surfaces of the film)

The cross-sectional area of a microstructured optical construction (1800) having sealant is shown shaded in Figure 37.

In a typical example, the microstructured optical constructions that can be treated by the methods of the present disclosure include a microstructured prismatic optical film, which may be a light redirecting film and the second film is a cover film. Bonding of the structured surface of the optical film to an opposing surface of the cover film occurs via a layer of adhesive, wherein certain portions of the surface features of the microstructured prismatic elements of the microstructured optical film penetrate partially into the adhesive to a depth that is less than the height of the microstructured prismatic element. The microstructured prismatic elements of the present disclosure have two or more peaks. In some embodiments, only one peak of a microstructured prismatic element penetrates partially into the adhesive. In other embodiments, both peaks (e.g., in a two peak microstructured prismatic element) penetrate the adhesive. Under certain circumstances, it is preferable that only one peak of the multi-peak microstructured prismatic element penetrates into the adhesive in order to increase light redirection.

As mentioned previously, the microstructured optical constructions that can be used in the methods of the present disclosure are exemplified by referring to light, or daylight redirecting films and light or daylight redirecting layers as being part of the overall construction, but the concepts and subject matter taught and claimed in this application can extend to methods using other microstructured optical films that are not light redirecting films.

Typically, the adhesive layer has a thickness less than the associated heights of the microstructured prismatic element that penetrates the adhesive so as to leave a gap between the adhesive layer and portions of the light redirecting layer comprising the microstructured prismatic elements.

Full penetration of the microstructured prismatic element into the adhesive would reduce or eliminate the needed difference in refractive index between the microstructured prismatic element and the surrounding low index material (e.g., air) such that light redirection would be significantly adversely affected.

The type of bonding disclosed and taught in this application between two films (e.g., a light redirecting film and a cover film) refers to bonding only via selected areas in the light redirecting film (such as, e.g., the tips of peaks in the microstructured prismatic elements) in order to increase the light redirecting function (or a suitable function in other microstructured optical films) of the film. As will be shown below, because the presence of the adhesive contacting the microstructured prismatic elements decreases the ability to redirect light as the bonding portions of the microstructured prismatic elements (e.g., portions of the peaks) penetrate into the adhesive, there is a functional balance between the size and number of the bonding portions and the strength of the bond between the light redirecting film and the cover film. That is, as the size and number of the bonding portions increases, the strength of the bond increases, which is beneficial, but there is also less area left to perform the light redirecting function of the original light redirecting film. Conversely, as the size of the bonding portions decreases, the higher amount of light is redirected, but the size of the area available for bonding decreases as does the strength of the bond between the two films.

If the refractive index of the adhesive and the prismatic element are similar, the light will not be redirected and will punch through the film, and can produce glare. As the size and number of the bonding portions increases, the amount of punch through will increase.

### Methods of reducing ingress of water into an edge of a microstructured optical construction

In one embodiment, the disclosure is directed to a method for reducing ingress of water into an edge of a light redirecting construction comprising:

- providing a light redirecting construction having a first major surface and a second major surface opposite the first major surface, and

- depositing a sealant on at least a portion of an edge of the light redirecting construction, wherein the light redirecting construction comprises:

  ○ a light redirecting film comprising a plurality of microstructured prismatic elements, having a first major surface and a second major surface opposite the first major surface

  ○ an adhesive layer comprising an adhesive, wherein the adhesive layer has a first major surface and a second major surface opposite the first major surface,

  ○ a cover film having a first major surface and a second major surface opposite the first major surface, wherein the microstructured prismatic elements penetrate at least partially into the first major surface of the adhesive layer, wherein the second major surface of the adhesive layer is immediately adjacent to the first major surface of the cover film wherein the light redirecting construction has at least one channel defined by the volume enclosed between the surface of the microstructured prismatic elements and the adhesive layer wherein the at least one channel extends from at least one edge of the light redirecting construction inwards.

In other embodiments, the disclosure is directed to a method for reducing ingress of water into an edge of a light redirecting construction comprising:

- providing a light redirecting construction having a first major surface and a second major surface opposite the first major surface, and

- depositing a sealant on at least a portion of an edge of the light redirecting construction, wherein the light redirecting construction comprises:

  ○ a light redirecting film comprising a plurality of microstructured prismatic elements, having a first major surface and a second major surface opposite the first major surface

○ an adhesive layer comprising an adhesive, wherein the adhesive layer has a first major surface and a second major surface opposite the first major surface,

○ a cover film having a first major surface and a second major surface opposite the first major surface,
wherein the microstructured prismatic elements penetrate at least partially into the first major surface of the adhesive layer,
wherein the second major surface of the adhesive layer is immediately adjacent to the first major surface of the cover film
wherein the light redirecting construction has at least one channel defined by the volume enclosed between the surface of the microstructured prismatic elements and the adhesive layer, wherein the at least one channel extends from at least one edge of the light redirecting construction inwards, and
wherein the sealant covers at least 90% of the cross sectional area of the channel.

In other embodiments, the disclosure is directed to a method for reducing ingress of water into an edge of a light redirecting construction comprising:

• providing a light redirecting construction having a first major surface and a second major surface opposite the first major surface, and

• depositing a sealant on at least a portion of an edge of the light redirecting construction, wherein the light redirecting construction comprises:

○ a light redirecting film comprising a plurality of microstructured prismatic elements, having a first major surface and a second major surface opposite the first major surface

○ an adhesive layer comprising an adhesive, wherein the adhesive layer has a first major surface and a second major surface opposite the first major surface,

○ a cover film having a first major surface and a second major surface opposite the first major surface,
wherein the microstructured prismatic elements penetrate at least partially into the first major surface of the adhesive layer,
wherein the second major surface of the adhesive layer is immediately adjacent to the first major surface of the cover film
wherein the light redirecting construction has at least one channel defined by the volume enclosed between the surface of the microstructured prismatic elements and the adhesive layer, wherein the at least one channel extends from at least one edge of the light redirecting construction inwards, and
wherein the sealant reduces ingress of water into the channel with respect to a light redirecting construction lacking the sealant.

In another embodiment, the disclosure is directed to a method for reducing ingress of water into an edge of a light redirecting construction comprising:

• providing a light redirecting construction having a first major surface and a second major surface opposite the first major surface, and

• depositing a sealant on at least a portion of an edge of the light redirecting construction, wherein the light redirecting construction comprises:

○ a light redirecting film comprising a plurality of microstructured prismatic elements, having a first major surface and a second major surface opposite the first major surface

○ an adhesive layer comprising an adhesive, wherein the adhesive layer has a first major surface and a second major surface opposite the first major surface,

○ a cover film having a first major surface and a second major surface opposite the first major surface,
wherein the microstructured prismatic elements penetrate at least partially into the first major surface of the adhesive layer,
wherein the second major surface of the adhesive layer is immediately adjacent to the first major surface of the cover film
wherein the light redirecting construction has at least one channel defined by the volume enclosed between the surface of the microstructured prismatic elements and the adhesive layer wherein the at least one channel extends from at least one edge of the light redirecting construction inwards,
wherein the sealant is a wax and penetrates in the channel at most 5 mm.

In yet another embodiment, the disclosure is directed to a method for applying a light redirecting construction to a glazing comprising:

- providing a light redirecting construction having a first major surface and a second major surface opposite the first major surface,

- depositing a sealant on at least a portion of an edge of the light redirecting film,

- spraying a glazing with an aqueous solution,

- positioning the sealed light redirecting construction on the glazing, and

- removing excess aqueous solution by applying pressure to the light redirecting construction, wherein the light redirecting construction comprises:

   ◦ a light redirecting film comprising a plurality of microstructured prismatic elements, having a first major surface and a second major surface opposite the first major surface

   ◦ an adhesive layer comprising an adhesive, wherein the adhesive layer has a first major surface and a second major surface opposite the first major surface,

   ◦ a cover film having a first major surface and a second major surface opposite the first major surface,
   wherein the microstructured prismatic elements penetrate at least partially into the first major surface of the adhesive layer,
   wherein the second major surface of the adhesive layer is immediately adjacent to the first major surface of the cover film,
   wherein the light redirecting construction has at least one channel defined by the volume enclosed between the surface of the microstructured prismatic elements and the adhesive layer,
   wherein the at least one channel extends from at least one edge of the light redirecting construction inwards, and
   wherein the sealant penetrates in the channel no more than 5 mm.

## Edge Sealing

As mentioned previously, the inventors have observed that one potential limitation of tip-bonded constructions such as the ones described above is that they may not be fully sealed at the edges. The prismatic microstructures described above may be linear and bonding such microstructures at the tips to the cover film leaves air channels in the construction. In the case of light redirecting constructions, these air channels are necessary to provide the required difference in refractive index to have a light redirecting properties. Under certain circumstances, however, these air channels can act as micro capillaries. Water or solutions introduced at the edges either during wet installation or as a result of condensation (or even due to cleaning of the construction) may be drawn into the air channels immersing the microstructures. Such edge ingress degrades the optical performance of the microstructured optical construction, especially for light redirecting construction, and may be visually unacceptable.
To overcome this potential disadvantage, tip-bonded constructions may be sealed at the edges to prevent ingress of contaminants such as moisture and dirt. In those embodiments, one option to seal at least a portion of the edge is for the sealant to be applied in or on a channel to block at least partially the channels (space between the microstructured prismatic elements and the adhesive layer bonding the microstructured optical film and the cover film). In other embodiments, the entire edge can be sealed in this manner if the adhesive fills the space between the microstructured prismatic elements near the edge. However, it is not necessary for the adhesive to penetrate the channels in order for the sealant to be effective. The sealant can form a film or coating on the edge of the microstructured optical construction without necessarily penetrating into the channels. In some embodiments, excess sealant (e.g. on the face of the film (a major surface of the film, as opposed to an edge, is removed after application.) In cases where the sealant needs to be cured (or set or hardened, etc.), it may be advisable to wait a suitable time for the sealant to be cured (or set or hardened, etc.) before proceeding to install the film construction onto a glazing.

In preferred embodiments of this disclosure, the edge sealing is carried out before the installation of the film onto a glazing. This is a difference with respect to other installation procedures where sealing of the entire film construction (not necessarily the edge of the construction) occurs after installation. Typical after-installation sealing procedures seal the space between the film and the frame holding the glazing, but do not seal the edge of the film construction.

In some embodiments, the construction has a rectangular or square shape and the edge of one or more sides, up to all four sides, is sealed. In certain embodiments, the sealing can occur by the use of a sealant chosen from solvent-based adhesives, hot-melt adhesives, waxes, pressure sensitive adhesive tapes, cyanoacrylate (moisture curing) adhesives, epoxy adhesives, silicone polymers), thermoplastic polymers, and thermoset adhesives, or by using pressure, temperature, or some combination of both, including the use of a hot knife. A sealant can be a solid or liquid at room temperature and is typically applied to at least a portion of an edge after the film construction is cut.

In other embodiments, the shape of the construction is circular or ellipsoidal and the edge of the construction is sealed all around.

## Multi-peaked microstructured prismatic elements

In general, in daylight redirecting applications it is preferable that the incident light be redirected up and at shallow angles from the horizontal position that the light impinges on the LRF. This distribution provides light deeper within the interior spaces and away from windows where natural light is in short supply.

The light output from a light directing film is shown in Figure 10. In general, it is desired to redirect the light upward and deep into the room. Light that is not redirected (punch-through) or light that is directed downward is not desirable as it will contribute to glare. The inventors have designated different upward and downward regions to model and measure light redirection to optimize performance. For example, as shown in Figure 10 is a region designated as "Direct Glare" for angles from 0 degrees to -15 degrees below horizontal. In addition to improving the redirection performance, the inventors have considered other design constraints imposed to ensure that the microstructured prismatic elements can be made using a viable manufacturing process.

With respect to a microstructured prismatic element having two peaks, each peak may have different included angles and different heights. The inventors have taken into account the bonding process in order to design improved microstructured prismatic elements. For example, the inventors have found that during lamination of the daylight redirecting film and the cover film, the direction of adhesive flow is constrained by the tip immersion points (Figure 11).

Typically, adhesive flows along the facet depending on which side of the tip immersion point it lies. The direction of adhesive flow along the four facets of a two-peaked microstructured prismatic element is indicated by the arrows in Figure 11. As mentioned above, adhesive flow along the facets leads to excessive adhesive along the facets and further degradation of the optical performance. The inventors have found that the magnitude of adhesive flow is proportional to the volume of adhesive displaced by a certain facet as shown in Figure 12.

The inventors calculated the volume of adhesive displaced by a facet as a function of the area embedded within the adhesive. The embedded areas for the four facets shown in Figure 12 are: m=1.22, n=7.05, o=3.62, and p=2.40). Based on these areas, the more gentle facets (n and o) are expected to displace more adhesive than steeper ones (m and p). Based on this model the inventors expect that the optical performance along those facets would be less favorable than along the steeper ones. The inventor's model has been verified using the structure shown in Figures 14(a) and (b).

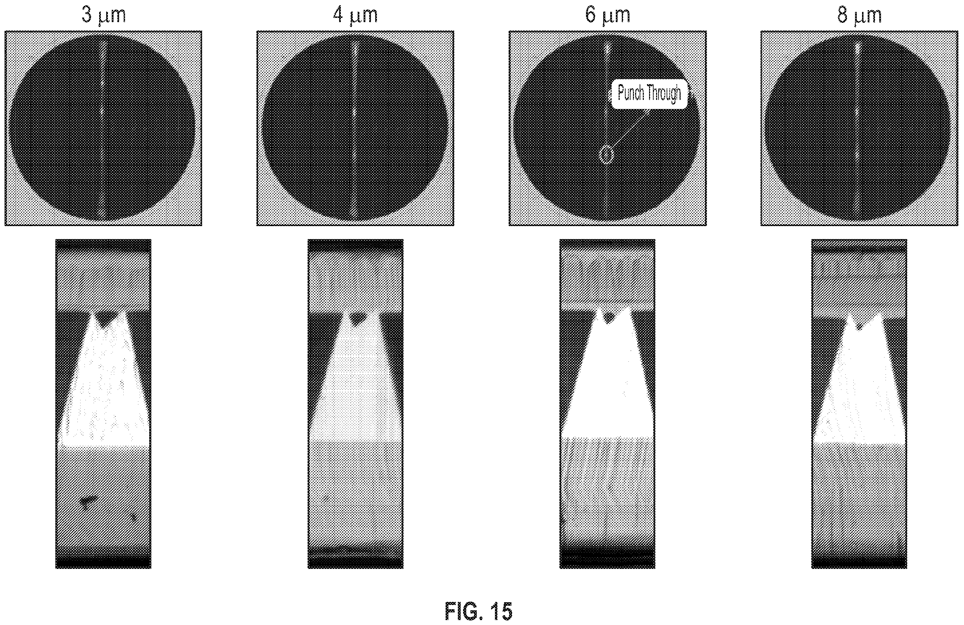

In this instance, the structure was embedded into a film with a 6 um thick adhesive. The degree of adhesive flow observed along each facet is proportional to the volume of adhesive displaced which is directly related to its slope angle. As shown in Figure 14(b) more gently slopes (2, 3) exhibit significantly more adhesive flow (white areas) along their facets than steeper slopes (1, 4). In Figures 14(a) and (b), the dark or black areas surrounding the microstructured prismatic element represent air, whose presence around the microstructured prismatic element aids in the refraction of light characteristic of a daylight redirecting film. As can be seen in the figure, there is significant adhesive build up in the valley defined by slopes 2 and 3. Depending on the adhesive thickness this valley can be almost completely embedded in adhesive, which would result in an increase in punch through glare as shown in Figure 15.

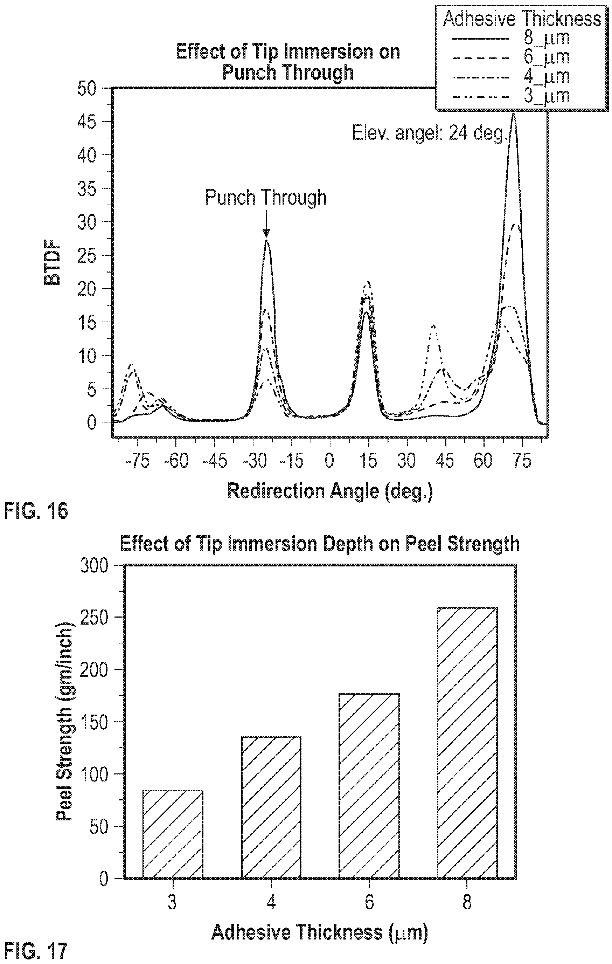

Adhesive flow into the structure as a function of adhesive thickness ranging from 3 to 8 um is shown in Figure 15. Using a 3um thick adhesive, the structure is barely embedded in the adhesive, whereas with an 8 um thick adhesive, the valley is almost completely filled with adhesive. A corresponding increase in punch through is observed with increasing structure immersion as shown in the conoscopic plots of Figure 15 and in Figure 16.

However, while reducing tip immersion improves optics by reducing punch-through it comes at the price of reduced peel strength between the films in the laminate. Reduced peel strength can adversely affect durability of the film. The effect of tip immersion on peel force is shown in Figure 17. As can be seen in that figure, the peel increases by more than a factor of three as the adhesive thickness increases from 3 um to 8 um.

Based on results from the inventor's model and observations from empirical testing, the inventors have determined certain guidelines regarding the design and orientation of microstructured prismatic elements suitable for lamination methods involving tip bonding when using asymmetric multi-peaked redirection microstructured prismatic elements:

1. It is preferable that only a single peak be immersed in the adhesive

2. It is preferable that the "steeper" peak (that is the peak with the smaller apex angle) should be immersed in the adhesive.

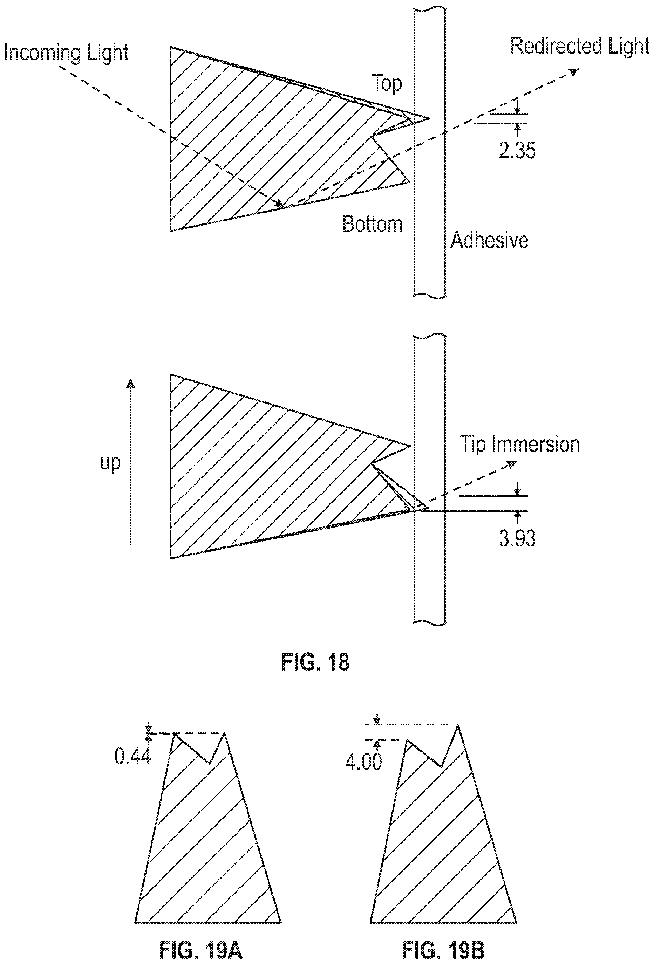

These concepts are illustrated in Figure 18, which shows the base microstructured prismatic element from Figure 14 in grey shading. Two modified structures in darker shading are shown:

a. A top (steeper) peak taller by 5 um

b. Bottom (more gentle) peak taller by 5 um

In both cases the structures were modeled to be immersed 4 um into the adhesive. The punch through glare was then calculated at various elevation angles as shown in Fig. 35

As seen in Figure 35, immersing the steeper, top peak results in significantly lower punch through glare at all of the elevation angles tested. Therefore, the inventors have determined additional guidelines to reduce punch through glare for the type of tip bonded film constructions of the present disclosure, concluding that it is preferable to:

a) Immerse the steepest peak in a multi-peaked asymmetrical redirecting microstructured prismatic element into the adhesive

b) Avoid immersing the bottom peak into the adhesive. The inventors have found that the bottom facet is highly important in a redirecting microstructured prismatic element given that total internal reflection of the incoming light occurs at this surface. In the inventors view, the upper peaks/facets can be immersed into the adhesive with lesser impact on optical performance.

The inventors designed a steeper, upper (sun-facing, closer to ceiling) microstructured prismatic element with a peak 4 um taller than the lower, gentler peak. In a tip-bonded construction this peak would be partially immersed in the adhesive while the lower one would not be immersed. In this preferred orientation the impact of tip immersion on optical performance would be reduced. This is just one example of a microstructured prismatic element that could be used for tip-bonding film construction.

The type of construction proposed in this application may serve various purposes. For example, the assembly may protect the microstructured prismatic elements on the light redirecting film, the second film to which the light redirecting film is bonded may provide additional functionality, such as diffusion, infrared reflection, control of visible light transmission, etc., and the construction may also facilitate attachment of the light redirecting film to a mounting surface, such as a window.

Bonding the two films offers other significant advantages. For example, the resulting construction can have improved handling, rigidity, and provide the ability to attain thinner final constructions.

## Basic constructions that can be used in the instant methods

Any of the microstructured optical constructions in U.S. Provisional Patent Application No. 62/336,726, filed on May 15, 2016, which is incorporated herein by reference in its entirety, can be used in the methods of the present disclosure. In some embodiments, the methods of the present disclosure can be used on film constructions as described below. In one embodiment, the disclosure is directed to a film construction comprising:

- a light redirecting film having a first major surface and a second major surface opposite the first major surface,

  ○ wherein the first major surface of the light redirecting film comprises a plurality of microstructured prismatic elements,

  ○ wherein one or more of the microstructured prismatic elements have a first peak and a second peak,

  ○ wherein the first peak has a height H1 and the second peak has a height H2,

○ wherein H3 is H1 - H2, and H3 is equal or greater than 1 micron,

- an adhesive layer comprising an adhesive, wherein the adhesive layer has a first major surface and a second major surface opposite the first major surface,
- a cover film having a first major surface and a second major surface opposite the first major surface,

wherein the first peak of one or more of the microstructured prismatic elements penetrates at least partially into the first major surface of the adhesive layer,
wherein the second major surface of the adhesive layer is adjacent to the first major surface of the cover film.

In another embodiment, the disclosure is directed to methods that can be used on a film construction comprising:

- a light redirecting film having a first major surface and a second major surface opposite the first major surface,

  ○ wherein the first major surface of the light redirecting film comprises a plurality of microstructured prismatic elements,

  ○ wherein one or more of the microstructured prismatic elements have a first peak and a second peak,

  ○ wherein the first peak has a height H1 and the second peak has a height H2,

  ○ wherein H3 is H1 - H2, and H3 is from 1 microns to 8 microns,

  • an adhesive layer comprising an adhesive, wherein the adhesive layer has a first major surface and a second major surface opposite the first major surface,

  • a cover film having a first major surface and a second major surface opposite the first major surface,

  • a diffusion layer,

wherein when the film construction is in a vertical position, the first peak of the microstructured prismatic element is positionally located above the second peak,
wherein the first peak has an apex angle B1 and the second peak has an apex angle B2, and wherein B1 < B2,
wherein the first peak of one or more of the microstructured prismatic elements penetrates at least partially into the first major surface of the adhesive layer,
wherein the first major surface of the light redirecting film is bonded to the first major surface of the adhesive layer,
wherein the second major surface of the adhesive layer is bonded to the first major surface of the cover film.

In another embodiment, the disclosure is directed to methods that can be used on a film construction comprising:

- a light redirecting film having a first major surface and a second major surface opposite the first major surface,

  ○ wherein the first major surface of the light redirecting film comprises a plurality of microstructured prismatic elements,

  ○ wherein one or more of the microstructured prismatic elements have a first peak, a second peak, and a third peak,

  ○ wherein the first peak has a height H1, the second peak has a height H2, the third peak has a height H3,

  ○ wherein H1>H2 and H1>H3,

  ○ wherein H4 is H1 - H2, and H5 is H1 - H3, and wherein H4 is from 2 microns to 10 microns and H5 is from 2 microns to 10 microns,

- an adhesive layer comprising an adhesive, wherein the adhesive layer has a first major surface and a second major surface opposite the first major surface,
- a cover film having a first major surface and a second major surface opposite the first major surface,

wherein when the film construction is in a vertical position, the first peak of the microstructured prismatic element is: a)

17

positionally located above the second peak, b) positionally located above the third peak, or positionally located above both the second peak and the third peak, wherein the first peak has an apex angle B1, the second peak has an apex angle B2, and the third peak has an apex angle B3, wherein B1 < B2 and B1 < B3,

wherein the first peak of one or more of the microstructured prismatic elements penetrates at least partially into the first major surface of the adhesive layer,

wherein the first major surface of the light redirecting film is bonded to the first major surface of the adhesive layer,

wherein the second major surface of the adhesive layer is bonded to the first major surface of the cover film.

In another embodiment, the disclosure is directed to methods that can be used on a film construction comprising:

- a light redirecting film having a first major surface and a second major surface opposite the first major surface,

  ○ wherein the first major surface of the light redirecting film comprises a plurality of microstructured prismatic elements,

  ○ wherein one or more of the microstructured prismatic elements have three or more peaks,

  ○ wherein each of the peaks has a height,

  ○ wherein the first peak has a height larger than the height of each of the rest of the peaks,

  ○ wherein the difference between the height of the first peak and the height of each of the rest of the peaks is, independently from each other, from 2 microns to 10 microns,

- an adhesive layer comprising an adhesive, wherein the adhesive layer has a first major surface and a second major surface opposite the first major surface,
- a cover film having a first major surface and a second major surface opposite the first major surface,

wherein when the film construction is in a vertical position, the first peak of the microstructured prismatic element is positionally located above at least one of the rest of the peaks, wherein each of the peaks has an apex angle, and wherein the apex angle of the first peak is smaller than the apex angle of each of the rest apex angles,

wherein the first peak of one or more of the microstructured prismatic elements penetrates at least partially into the first major surface of the adhesive layer,

wherein the first major surface of the light redirecting film is bonded to the first major surface of the adhesive layer,

wherein the second major surface of the adhesive layer is bonded to the first major surface of the cover film.

Other embodiments of the methods of the present disclosure can be used on the following film constructions:

- A film construction comprising the following elements adjacent to each other in the specified order: (a) a diffusing layer, (b) a light redirecting film, (c) an adhesive layer, and (d) a cover film,
- A film construction comprising the following elements immediately adjacent to each other in the specified order: (a) a diffusing layer, (b) a light redirecting film, (c) an adhesive layer, and (d) a cover film,
- A film construction comprising the following elements adjacent to each other in the specified order: (a) a diffusing layer, (b) a light redirecting film, (c) an adhesive layer, (d) a cover film, (e) and a window film adhesive,
- A film construction comprising the following elements immediately adjacent to each other in the specified order: (a) a diffusing layer, (b) a light redirecting film, (c) an adhesive layer, (d) a cover film, (e) and a window film adhesive,
- A film construction comprising the following elements adjacent to each other in the specified order: (a) a diffusing layer, (b) a light redirecting film, (c) an adhesive layer, (d) a cover film, (e) a window film adhesive, and (f) a liner,
- A film construction comprising the following elements immediately adjacent to each other in the specified order: (a) a diffusing layer, (b) a light redirecting film, (c) an adhesive layer, (d) a cover film, (e) a window film adhesive, and (f) a liner,
- A film construction comprising the following elements adjacent to each other in the specified order: (a) a microreplicated diffuser coating, (b) a light redirecting film, (c) an adhesive layer, and (d) a cover film,
- A film construction comprising the following elements immediately adjacent to each other in the specified order: (a) a microreplicated diffuser coating, (b) a light redirecting film, (c) an adhesive layer, and (d) a cover film,
- A film construction comprising the following elements adjacent to each other in the specified order: (a) a microreplicated diffuser coating, (b) a light redirecting film, (c) an adhesive layer, (d) a cover film, (e) and a window film adhesive,
- A film construction comprising the following elements immediately adjacent to each other in the specified order: (a) a microreplicated diffuser coating, (b) a light redirecting film, (c) an adhesive layer, (d) a cover film, (e) and a window film adhesive,

- A film construction comprising the following elements adjacent to each other in the specified order: (a) a microreplicated diffuser coating, (b) a light redirecting film, (c) an adhesive layer, (d) a cover film, (e) a window film adhesive, and (f) a liner,
- A film construction comprising the following elements immediately adjacent to each other in the specified order: (a) a microreplicated diffuser coating, (b) a light redirecting film, (c) an adhesive layer, (d) a cover film, (e) a window film adhesive, and (f) a liner,
- A film construction comprising the following elements adjacent to each other in the specified order: (a) a coating with diffusing agents, (b) a light redirecting film, (c) an adhesive layer, and (d) a cover film,
- A film construction comprising the following elements immediately adjacent to each other in the specified order: (a) a coating with diffusing agents, (b) a light redirecting film, (c) an adhesive layer, and (d) a cover film,
- A film construction comprising the following elements adjacent to each other in the specified order: (a) a coating with diffusing agents, (b) a light redirecting film, (c) an adhesive layer, (d) a cover film, (e) and a window film adhesive,
- A film construction comprising the following elements immediately adjacent to each other in the specified order: (a) a coating with diffusing agents, (b) a light redirecting film, (c) an adhesive layer, (d) a cover film, (e) and a window film adhesive,
- A film construction comprising the following elements adjacent to each other in the specified order: (a) a coating with diffusing agents, (b) a light redirecting film, (c) an adhesive layer, (d) a cover film, (e) a window film adhesive, and (f) a liner,
- A film construction comprising the following elements immediately adjacent to each other in the specified order: (a) a coating with diffusing agents, (b) a light redirecting film, (c) an adhesive layer, (d) a cover film, (e) a window film adhesive, and (f) a liner,
- A film construction comprising the following elements adjacent to each other in the specified order: (a) a diffusing layer, (b) a light redirecting film, (c) an adhesive layer with diffusing agents, and (d) a cover film,
- A film construction comprising the following elements immediately adjacent to each other in the specified order: (a) a diffusing layer, (b) a light redirecting film, (c) an adhesive layer with diffusing agents, and (d) a cover film,
- A film construction comprising the following elements adjacent to each other in the specified order: (a) a diffusing layer, (b) a light redirecting film, (c) an adhesive layer with diffusing agents, (d) a cover film, (e) and a window film adhesive,
- A film construction comprising the following elements immediately adjacent to each other in the specified order: (a) a diffusing layer, (b) a light redirecting film, (c) an adhesive layer with diffusing agents, (d) a cover film, (e) and a window film adhesive,
- A film construction comprising the following elements adjacent to each other in the specified order: (a) a diffusing layer, (b) a light redirecting film, (c) an adhesive layer with diffusing agents, (d) a cover film, (e) a window film adhesive, and (f) a liner,
- A film construction comprising the following elements immediately adjacent to each other in the specified order: (a) a diffusing layer, (b) a light redirecting film, (c) an adhesive layer with diffusing agents, (d) a cover film, (e) a window film adhesive, and (f) a liner,
- A film construction comprising the following elements adjacent to each other in the specified order: (a) a microreplicated diffuser coating, (b) a light redirecting film, (c) an adhesive layer with diffusing agents, and (d) a cover film,
- A film construction comprising the following elements immediately adjacent to each other in the specified order: (a) a microreplicated diffuser coating, (b) a light redirecting film, (c) an adhesive layer with diffusing agents, and (d) a cover film,
- A film construction comprising the following elements adjacent to each other in the specified order: (a) a microreplicated diffuser coating, (b) a light redirecting film, (c) an adhesive layer with diffusing agents, (d) a cover film, (e) and a window film adhesive,
- A film construction comprising the following elements immediately adjacent to each other in the specified order: (a) a microreplicated diffuser coating, (b) a light redirecting film, (c) an adhesive layer with diffusing agents, (d) a cover film, (e) and a window film adhesive,
- A film construction comprising the following elements adjacent to each other in the specified order: (a) a microreplicated diffuser coating, (b) a light redirecting film, (c) an adhesive layer with diffusing agents, (d) a cover film, (e) a window film adhesive, and (f) a liner,
- A film construction comprising the following elements immediately adjacent to each other in the specified order: (a) a microreplicated diffuser coating, (b) a light redirecting film, (c) an adhesive layer with diffusing agents, (d) a cover film, (e) a window film adhesive, and (f) a liner,
- A film construction comprising the following elements adjacent to each other in the specified order: (a) a coating with diffusing agents, (b) a light redirecting film, (c) an adhesive layer with diffusing agents, and (d) a cover film,
- A film construction comprising the following elements immediately adjacent to each other in the specified order: (a) a coating with diffusing agents, (b) a light redirecting film, (c) an adhesive layer with diffusing agents, and (d) a cover film,

- A film construction comprising the following elements adjacent to each other in the specified order: (a) a coating with diffusing agents, (b) a light redirecting film, (c) an adhesive layer with diffusing agents, (d) a cover film, (e) and a window film adhesive,
- A film construction comprising the following elements immediately adjacent to each other in the specified order: (a) a coating with diffusing agents, (b) a light redirecting film, (c) an adhesive layer with diffusing agents, (d) a cover film, (e) and a window film adhesive,
- A film construction comprising the following elements adjacent to each other in the specified order: (a) a coating with diffusing agents, (b) a light redirecting film, (c) an adhesive layer with diffusing agents, (d) a cover film, (e) a window film adhesive, and (f) a liner,
- A film construction comprising the following elements immediately adjacent to each other in the specified order: (a) a coating with diffusing agents, (b) a light redirecting film, (c) an adhesive layer with diffusing agents, (d) a cover film, (e) a window film adhesive, and (f) a liner,
- A film construction comprising the following elements adjacent to each other in the specified order: (a) a light redirecting film with diffusing agents, (b) an adhesive layer, and (c) a cover film,
- A film construction comprising the following elements immediately adjacent to each other in the specified order: (a) a light redirecting film with diffusing agents, (b) an adhesive layer, and (c) a cover film,
- A film construction comprising the following elements adjacent to each other in the specified order: (a) a light redirecting film with diffusing agents, (b) an adhesive layer, (c) a cover film, (d) and a window film adhesive,
- A film construction comprising the following elements immediately adjacent to each other in the specified order: (a) a light redirecting film with diffusing agents, (b) an adhesive layer, (c) a cover film, (d) and a window film adhesive,
- A film construction comprising the following elements adjacent to each other in the specified order: (a) a light redirecting film with diffusing agents, (b) an adhesive layer, (c) a cover film, (d) a window film adhesive, and (e) a liner,
- A film construction comprising the following elements immediately adjacent to each other in the specified order: (a) a light redirecting film with diffusing agents, (b) an adhesive layer, (c) a cover film, (d) a window film adhesive, and (e) a liner,
- A film construction comprising the following elements adjacent to each other in the specified order: (a) a light redirecting film with diffusing agents, (b) an adhesive layer with diffusing agents, and (c) a cover film,
- A film construction comprising the following elements immediately adjacent to each other in the specified order: (a) a light redirecting film with diffusing agents, (b) an adhesive layer with diffusing agents, and (c) a cover film,
- A film construction comprising the following elements adjacent to each other in the specified order: (a) a light redirecting film with diffusing agents, (b) an adhesive layer with diffusing agents, (c) a cover film, (d) and a window film adhesive,
- A film construction comprising the following elements immediately adjacent to each other in the specified order: (a) a light redirecting film with diffusing agents, (b) an adhesive layer with diffusing agents, (c) a cover film, (d) and a window film adhesive,
- A film construction comprising the following elements adjacent to each other in the specified order: (a) a light redirecting film with diffusing agents, (b) an adhesive layer with diffusing agents, (c) a cover film, (d) a window film adhesive, and (e) a liner, and
- A film construction comprising the following elements immediately adjacent to each other in the specified order: (a) a light redirecting film with diffusing agents, (b) an adhesive layer with diffusing agents, (c) a cover film, (d) a window film adhesive, and (e) a liner.

**Light redirecting films used on constructions that can be sealed by the methods of the instant disclosure**

The first optical film may be any suitable film that has high optical transparency in the visible light region of the spectrum. The first optical film may be a single layer film or a multilayer film construction. The first optical film has a first major surface and a second major surface. The first major surface comprises a microstructured surface. This microstructured surface comprises an ordered arrangement of a plurality of asymmetrical multi-peaked microstructured prismatic elements.

A variety of articles have been developed to redirect sunlight to provide illumination within rooms. For example, the following patents and patent applications describe various light redirecting films and light redirecting microstructures: US Patent Publication No. 2008/0291541, titled "Light Redirecting Solar Control Film", filed 05/23/2007 (Padiyath et al.) and pending US Patent Applications Nos. 61/287360, titled "Light Redirecting Constructions" filed 12/17/2009 (Padiyath et al), and 61/287354, titled "Light Redirecting Film Laminate" filed 12/17/2009 (Padiyath et al.); PCT Application Publication No. WO 2012/134787, titled "Hybrid Light Redirecting and Light Diffusing Constructions", filed 03/12/2012 (Padiyath et al.), US Patent No. 5,551,042, titled "Structured Films and Use Thereof for Daylight Illumination", issued 08/27/1996 (Lea, et al.), US Patent Publication No. 2014/0211331, titled "Multiple Sequenced Daylight Redirecting Layers", filed 03/27/2014 (Padiyath et al.), PCT application titled "Lighting sheet, lighting panel, roll-up lighting screen, and method for manufacturing lighting sheet" published as WO2014147793A1, US Patent No. 8,040,610 titled "Light Guiding Film", issued 10/18/2011 (Ko, et al.), US Patent No. 8,107,164 titled "Window System and Light Guiding Film Therein", issued 01/31/2012 (Tsai), US Patent No. 8,664,521 titled" "Window System and Light Guiding Film Therein", issued 03/04/2014 (Tsai et al.), US Patent Publication No. 2014/0198390, titled "Dual-sided Daylight Redirecting Film", filed 03/27/2014 (Padiyath, et al.), US Patent Publication No. 2008/0292820, titled "Light Diffusing Solar Control Film", filed 05/23/2007 (Padiyath, et al.), US Patent No. 6,456,437, titled "Optical Sheets Suitable for Spreading Light", issued 09/24/2002 (Lea, et al.), PCT application titled "Room-Facing Light Redirecting Film with Reduced Glare," published as WO 2016/064667 and PCT application titled "Sun-Facing Light Redirecting Film with Reduced Glare," published as WO 2016/064621. The light redirecting films and light redirecting microstructures disclosed in the patents and patent applications in this paragraph are herein incorporated by reference. In general, any light redirecting film or layer, including those mentioned in this paragraph, and others known in the art, can be used in the constructions of this disclosure.

In certain embodiments, although the design of a given microstructured prismatic element shows sharp peaks (sharp apex angles), due to manufacturing effects, the actual manufactured microstructured prismatic element may have rounded peaks, as can be seen in Figures 14 and 15.

### Diffusive elements

While one of the main incentives for using light redirecting films is energy savings, visual comfort needs to be taken into account. As shown in Figure 1, while most of the sunlight is directed upwards a fraction may go downwards. This downward light can cause glare for the occupants. Because sunlight is highly collimated with about 0.5 degree spread and appears as a solar disk, sometimes a light redirecting film spreads that light vertically to form a solar column.

Both the total fraction of downward directed light and brightness of the solar column contribute to glare (visual discomfort). The brightness of the solar column depends on its angular spread. One solution the inventors have found to reduce glare is to introduce one or more diffuser layers in the optical path. The diffuser helps to spread out the solar column. In addition, the diffusive element provides more uniform ceiling illumination by diffusing the upward directed light. The inventors have found that the use of the diffuser layer reduces glare and the visibility of the solar column significantly. The diffuser layer can also contribute other beneficial properties such as the reduction (or mitigation) optical artifacts such as moire or color and the diffusion can also help hide cosmetic defects.

In some embodiments, diffusion may be accomplished by creating surface diffusers, bulk diffusers, and/or embedded diffusers. A diffusive element, also called a diffuser or a diffusing layer in this disclosure, may be a separate layer or coating having diffusive properties with respect to visible light or a surface treatment on a layer of the film constructions of the present disclosure that provides diffusive properties to the treated surface (e.g., a surface diffuser). For example, the diffusive element may be a separate layer (e.g., a bulk diffuser) that diffuses visible light and that is either coextruded, coated, or laminated to another layer of the film constructions of the present disclosure.

In some embodiments, bulk diffusion is accomplished by adding a diffusing agent, such as micro beads or nanoparticles to the coating or layer. In other embodiments, the diffusing agent is chosen from micro beads having average size from 0.1 microns to 100 microns, from 0.5 microns to 50 microns, 0.7 microns to 20 microns, and 1 micron to 5 microns.

A variety of diffusers have been developed and are known in the art. For example, the following patents and patent applications describe various type of diffusers: U.S. Patent Publication No. 2014/0104689, titled "Hybrid Light Redirecting and Light Diffusing Constructions, filed 12/05/2013, (Padiyath, et al.); PCT Application Publication No. WO 2014/093119, titled "Brightness Enhancing Film with Embedded Diffuser", filed 12/05/2013, (Boyd et al.); U.S. Patent No. 6,288,172, titled "Light Diffusing Adhesive", issued 09/11/2001 (Goetz, et al.); PCT Application Publication No. WO 2013/158475, titled "Brightness Enhancement Film with Substantially Non-imaging Embedded Diffuser", filed 04/12/2013, (Boyd, et al.), US 2015/0293272 (Pham), US 2013/0236697 (Walker), PCT Application Publication No. WO2015/050750 titled "Microstructured diffuser comprising first microstructured layer and coating, optical stacks, and method", filed 09/24/2014 (Naismith et al.), U.S. Patent Publication No. US20150293272 titled "Optical diffusing films and methods of making same", filed 11/19/2013 (Pham, et al.). The diffusers disclosed in the patents and patent applications in this paragraph are herein incorporated by reference. In general, any diffuser or diffusive element, including those mentioned in this paragraph, and others known in the art, can be used in the constructions of this disclosure.

One option to combine the effect of a diffuser with a light redirecting film is to adhere the light redirecting film to the window and mount the diffuser to an added pane. The present disclosure presents a solution where the diffuser layer and the light redirecting film in a single construction.

In some embodiments, the diffusing properties can lie within the adhesive, the window film adhesive, or any of the substrates that may be part of the light redirecting construction. In certain embodiments, the diffusing properties of any of the elements mentioned in the preceding sentence may be modified by introducing surface roughness, bulk diffusion, or using embedded diffusers. In other embodiments, the diffusing properties

In certain embodiments, the surface of a layer part of a light redirecting construction can be treated in such a manner that the layer diffuses visible light. Surface roughness to create diffusing properties in a layer can be accomplished by imparting a pattern on the surface of a layer that increases the angular spread of input light in a desired manner. Some methods used to impart such a pattern include embossing, replication, and coating.

In other embodiments, bulk diffusion can be accomplished by adding one or more diffusing agents to the window film adhesive. Diffusing agents can comprise particles or beads. Examples of diffusing agents include: polymeric or inorganic particles, spherical beads, and/or voids included in a layer.

As mentioned above, in some embodiments, the diffusive element comprises inorganic oxide nanoparticles, such as zirconia or silica nanoparticles. The size of the nanoparticles is chosen to avoid significant visible light back-scattering. In some embodiments, it may be desirable to employ a mixture of inorganic oxide particle types to obtain a specific optical or material property and/or to lower total composition cost.

In other embodiments, the diffusive element comprises surface modified colloidal nanoparticles, which can be inorganic oxide particles having a (e.g. unassociated) primary particle size or associated particle size of at least 1 nm or at least 5 nm. The primary or associated particle size is generally less than 100 nm, 75 nm, or 50 nm. Typically the primary or associated particle size is less than 40 nm, 30 nm, or 20 nm. It is preferred that the nanoparticles be unassociated. The nanoparticles measurements can be based on transmission electron miscroscopy (TEM). Surface modified colloidal nanoparticles can be substantially fully condensed.

Fully condensed nanoparticles (with the exception of silica) typically have a degree of crystallinity (measured as isolated metal oxide particles) greater than 55%, preferably greater than 60%, and more preferably greater than 70%. For example, the degree of crystallinity can range up to about 86% or greater. The degree of crystallinity can be determined by X-ray diffraction techniques. Condensed crystalline (e.g. zirconia) nanoparticles have a high refractive index whereas amorphous nanoparticles typically have a lower refractive index.

In other embodiments, the diffusive element comprises embedded particles or beads. Particles typically have an average size that is greater than about 0.25 microns (250 nanometers), or greater than about 0.5 microns, or greater than about 0.75 microns, or greater than about 1 micron, or greater than about 1.25 microns, or greater than about 1.5 microns, or greater than about 1. 7 5 microns, or greater than about 2 microns. Smaller particles are typical for diffusive elements that are relatively thin. However, for embodiments wherein the diffusive element is thicker, the particles may have an average size up to 5 microns or 10 microns. The concentration of particles may range from at least 1 or 2 wt-% to about 5, 6, 7, 8, 9, or 10 wt-% or greater.

The diffusive elements disclosed in PCT Application Publication No. WO 2015/020750 are incorporated herein by reference.

In yet other embodiments, a substrate or a layer part of a light redirecting construction can contain embedded diffusers. In one embodiment, an embedded diffuser layer can be formed in between the light redirecting layer and the substrate. This layer may consist of a matrix with diffusing agents. Alternatively the layer may be a surface diffuser layer consisting of a material with a refractive index sufficiently different from the light redirecting layer to obtain a desired level of diffusion. In other embodiments, various types of diffusers may also be used in combination.

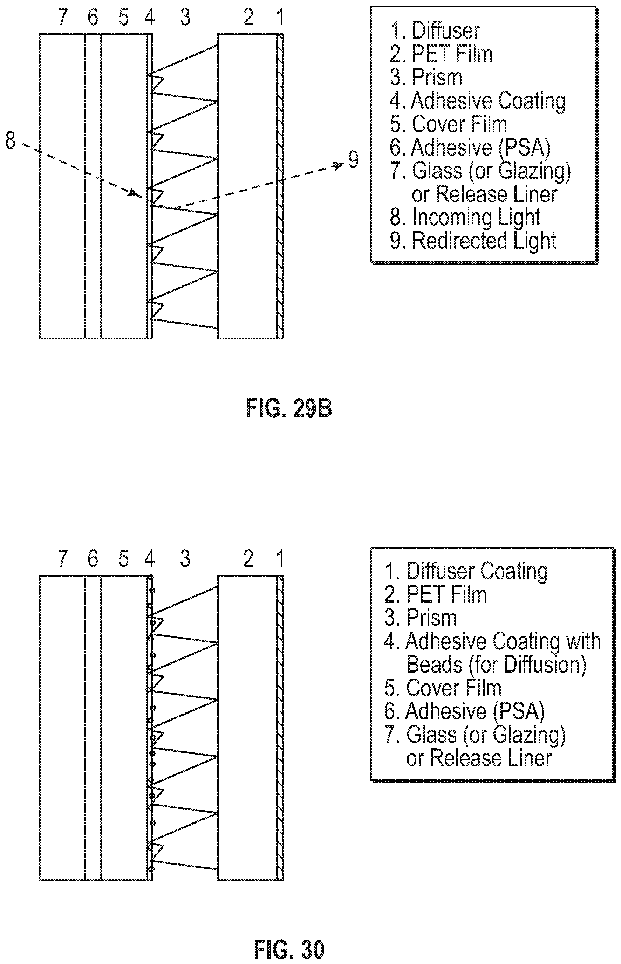

Diffusing agents (such as beads or particles) can be incorporated into a diffuser layer (e.g., a diffuser coating), a light redirecting substrate, the microstructured prismatic element, the adhesive layer, the cover film, or the window film adhesive, which correspond to layers 1,2,3,4,5 or 6 as shown in Figure 30.

- The beads (or particles) incorporated into a diffuser layer or the adhesive layer (layers 1 or 4 in Figure 30) can be in the form of a thin film or a coating, such as a hardcoat or a layer comprising an adhesive. However, the diffuser layer can also be laminated to the light redirecting substrate. A diffusing coating can be prepared by adding beads (or particles), such as described in US 6,778,240 and US7190525, which are incorporated herein by reference. In one embodiment, clear beads with appropriate refractive index, for example PMMA beads are used in an acrylate adhesive. These Index-matched beads incorporated into diffuser layer or the adhesive layer can modify the surface texture resulting in a surface diffuser. This thin layer can be described a "surface" diffuser.

- Beads incorporated into the bulk of the light redirecting substrate, the microstructured prismatic element, the cover film, or the window film adhesive (layers 2,3,5, or 6 in Figure 30) which have different refractive index can be scattering. Organic beads; for example polystyrene or inorganic particles, for example, TiO2 can be used. The different in refractive index in the bulk of the film can be described as a "bulk" diffuser. In general, bulk diffusers have lower light transmission than surface diffusers due to multiple scatterings and back-scattering of light.

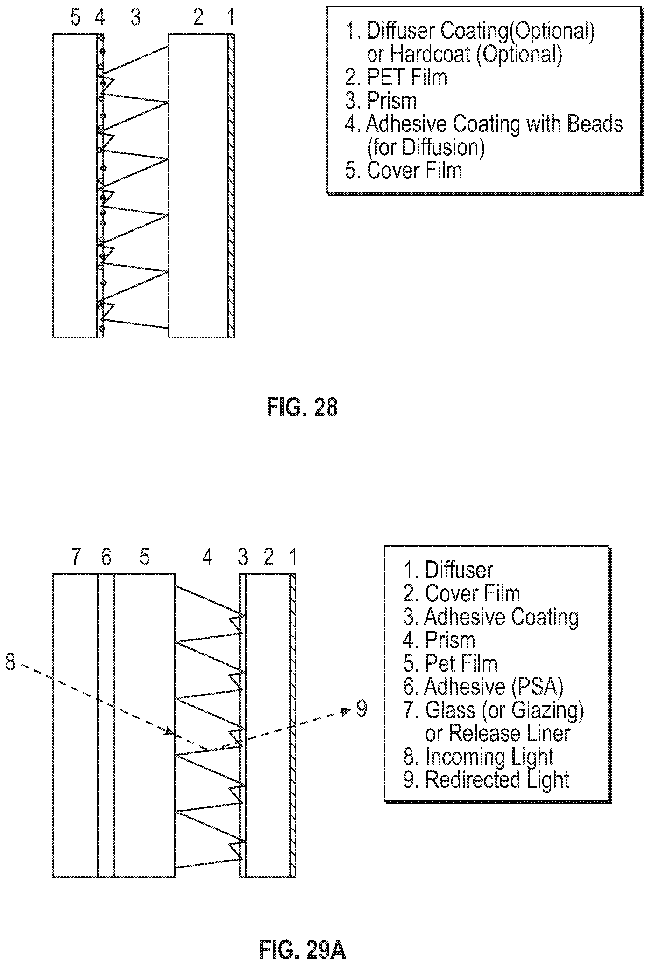

- In another embodiment, comprises fabricating a microtextured layer on the plano surface of light redirecting substrate (layer 2 of Figure 29). In this configuration, element 1 represents the microtextured surface. This may be done, for example, by creating microstructures on the surface. Alternatively, element 1 can comprise a microtextured film that is laminated to element 2.

### Cover Film

The film constructions of the present disclosure also comprise a second film, or cover film. In some embodiments, the cover film is an optical film. In general, the cover film has a first major surface and a second major surface. Typically, the second major surface of the second optical film is coated with an adhesive that makes contact with and is bonded to at least some of the microstructures on the surface of the first optical film.

The second film may be the made of the same material or materials as the first optical film, or it may be different. In some embodiments, the second film protects the microstructured surface and prevents the microstructured prismatic elements from becoming damaged, dirty or otherwise rendered incapable of redirecting light.

Besides being the protective layer for the microstructured surface, the second film can also provide additional functionality to the light redirecting laminate. For example, the second optical film can be a multilayer film that can reflect infrared light. In this way the light redirecting film construction can also help to keep the undesirable infrared light (heat) out of the building while allowing the desirable visible light into the building. Examples of suitable multilayer films useful as the cover film, include those disclosed, for example, in U.S. Pat. Nos. 6,049,419, 5,223,465, 5,882,774, 6,049,419, RE 34,605, 5,579,162 and 5,360,659, which films are incorporated herein by reference as possible cover films useful in the film constructions of the present invention.

In some embodiments, the cover film is a multilayer film in which the alternating polymeric layers cooperate to reflect infrared light. In some embodiments, at least one of the polymeric layers is a birefringent polymer layer.

In some embodiments, when the first major surface of the second optical film is exposed to the inside of the room, it may be desirable to have additional coatings on the exposed major surface of the cover film. For example, the surface may contain a protective coating such as a hardcoat to prevent the surface from scratches and marks as well as to protect the surface from damage from surface cleaners, or to make the surface graffiti -resistant or easier to clean. Examples of suitable coatings include, for example, hardcoats, anti-scratch coatings, low surface energy coatings or easy clean coatings.

Typically, the second optical film or second multilayer optical film, is prepared from polymeric materials that permit the film to be optically clear. Examples of suitable polymeric materials include, for example, polyolefins such as polyethylene and polypropylene, polyvinyl chloride, polyesters such as polyethylene terephthalate, polyamides, polyurethanes, cellulose acetate, ethyl cellulose, polyacrylates, polycarbonates, silicones, and combinations or blends thereof.

The optical film may contain other components besides the polymeric material, such as fillers, stabilizers, antioxidants, plasticizers and the like. In some embodiments, the optical film may comprise a stabilizer such as a UV absorber (UVA).

### Adhesives

Typically, the second major surface of the second film (cover film) contacts the adhesive layer, which in turn contacts at least the tops of the refractive microstructured prismatic elements. Bonding occurs at the areas of contact between the second film and the adhesive. Similarly, there is bonding between the tops of the microstructured prismatic elements and the adhesive.

In certain embodiments, this bonding may take a variety of forms useful for laminating together two polymeric units, including adhesive bonding, heat lamination, ultrasonic welding and the like. For example, in one embodiment, the second film could be heated to soften the film and the film contacted to the microstructured surface of the first optical film. The heated film, upon cooling, forms bonds to the contacted portions of the micro structured layer of the first optical film. Similarly, the second film could be dry laminated to the microstructured surface of the first optical film and then heat, either directly or indirectly, could be applied to produce the laminated article. Alternatively, an ultrasonic welder could be applied to the dry laminate construction. However, typically, adhesive bonding is used. When adhesive bonding is used, either a heat activated adhesive or a pressure sensitive adhesive can be used. Generally, pressure sensitive adhesives are used, especially the optically clear pressure sensitive adhesives.

To effect the adhesive bonding, the adhesive may be applied either to the microstructured surface of the first optical film, or to the second major surface of the second optical film. Typically, the adhesive is applied to the second major surface of the second optical film. The applied adhesive coating may be continuous or discontinuous.

The adhesive coating may be applied through any of a variety of coating techniques including knife coating, roll coating, gravure coating, rod coating, curtain coating, air knife coating, or a printing technique such as screen printing or inkjet printing. The adhesive may be applied as aqueous or solvent based (e.g., solution, dispersion, suspension), or 100% solids composition. If aqueous or solvent-based adhesive compositions are used, typically, the coating is dried prior to lamination by air drying or at elevated temperatures using, for example, an oven such as a forced air oven. The adhesive coated cover film can then be laminated to the microstructured surface of the first optical film. The lamination process should be well controlled to provide uniform and even contact on the tips of the microstructured prisms described above.

In certain embodiments, the adhesives used to laminate the two films in constructions according to this disclosure, have the following characteristics:

a) the adhesive (after drying) flows into the microstructured prismatic elements under suitable conditions, for example those used to laminate the two films. Suitable conditions, such as lamination, typically include heat, pressure, and, if performed in roll-to-roll operations, a certain line speed. The flow properties and thickness of the adhesive relative to the microstructured prismatic elements may be adjusted as needed. Adhesive properties that could influence flow include molecular weight, cross link density, and additives, such as plasticizers;

b) the adhesive is resistant to "creep" under the conditions used to store, apply, and use the product; and

c) the adhesive is durable under UV exposure and thermal conditions encountered. In some embodiments, UV stabilizers, such as a UV absorber (UVA) or hindered amine light stabilizer (HALS), may be added to the adhesive.

In certain embodiments, the adhesive in the adhesive layer is chosen from a pressure sensitive adhesive, a thermoset adhesive, hot melt adhesive, and a UV curable- adhesive.

Suitable adhesives can be or include any optical adhesive that may be desirable in an application. Exemplary optical adhesives include pressure sensitive adhesives (PSAs), heat-sensitive adhesives, solvent-volatile adhesives, and UV-curable adhesives such as UV-curable optical adhesives available from Norland Products, Inc. Exemplary PSAs include those based on natural rubbers, synthetic rubbers, styrene block copolymers, (meth)acrylic block copolymers, polyvinyl ethers, polyolefins, and poly(meth)acrylates or silicones.

As used herein, (meth)acrylic (or acrylate) refers to both acrylic and methacrylic species. Other exemplary PSAs include (meth)acrylates, rubbers, thermoplastic elastomers, silicones, urethanes, and combinations thereof. In some cases, the PSA is based on a (meth)acrylic PSA or at least one poly(meth)acrylate. Exemplary silicone PSAs include a polymer or gum and an optional tackifying resin. Other exemplary silicone PSAs include a polydiorganosiloxane polyoxamide and an optional tackifier.

In some cases, an optical adhesive layer can be or include a structural adhesive. Generally, useful structural adhesives contain reactive materials that cure to form a strong adhesive bond. The structural adhesive may cure spontaneously upon mixing (such as a 2 part epoxy adhesive) or upon exposure to air (such as a cyanoacrylate adhesive) or curing may be effected by the application of heat or radiation (such as UV light). Examples of suitable structural adhesives include epoxies, acrylates, cyanoacrylates, urethanes, and the like.

Other exemplary pressure sensitive adhesives for use in the articles of the present disclosure include crosslinked tackified acrylic pressure-sensitive adhesives. Other pressure sensitive adhesives such as blends of natural or synthetic rubber and resin, silicone or other polymer systems, with or without additives can be used in the film constructions of this disclosure.

Acrylic Acid and Meth(acrylic) Acid Esters: The acrylic esters are present at ranges of from about 65 to about 99 parts by weight, for example from about 78 to about 98 parts by weight, and in some embodiments from about 90 to about 98 parts by weight. Useful acrylic esters include at least one monomer selected from the group consisting of a first monofunctional acrylate or methacrylate ester of a non-tertiary alkyl alcohol, the alkyl group of which comprises from 4 to about 12 carbon atoms, and mixtures thereof. Such acrylates or methacrylate esters generally have, as homopolymers, glass transition temperatures below about -25° C. A higher amount of this monomer relative to the other comonomers affords the PSA higher tack at low temperatures.

Examples of acrylate or methacrylate ester monomers include, but are not limited to, those selected from the group consisting of n-butyl acrylate (BA), n-butyl methacrylate, isobutyl acrylate, 2-methyl butyl acrylate, 2-ethylhexyl acrilate, n-octyl acrylate, isooctyl acrylate (1OA), isooctyl methacrylate, isononyl acrylate, isodecyl acrylate, and mixtures thereof.

In some embodiments, the acrylates include those selected from the group consisting of isooctyl acrylate, n-butyl acrylate, 2-methyl butyl acrylate, 2-ethylhexyl acrylate, and mixtures thereof.

Polar Monomers: Low levels of (typically about 1 to about 10 parts by weight) of a polar monomer such as a carboxylic acid can be used to increase the cohesive strength of the pressure-sensitive adhesive. At higher levels, these polar monomers tend to diminish tack, increase glass transition temperature and decrease low temperature performance.

Useful copolymerizable acidic monomers include, but are not limited to, those selected from the group consisting of ethylenically unsaturated carboxylic acids, ethylenically unsaturated sulfonic acids, and ethylenically unsaturated phosphonic acids. Examples of such monomers include those selected from the group consisting of acrylic acid (AA), methacrylic acid, itaconic acid, fumaric acid, crotonic acid, citraconic acid, maleic acid, beta-carboxyethyl acrylate, sulfoethyl methacrylate, and the like, and mixtures thereof.

Other useful copolymerizable monomers include, but are not limited to, (meth)acrylamides, N,N-dialkyl substituted (meth)acrylamides, N-vinyl lactams, and N,N-dialkylaminoalkyl(meth)acrylates. Illustrative examples include, but are not limited to, those selected from the group consisting of N,N-dimethyl acrylamide, N,N-dimethyl methacrylamide, N,N-diethyl acrylamide, N,N-diethyl methacrylamide, N,N-dimethylaminoethyl methacrylate, N,N-dimethylaminopropyl methacrylate, N,N-dimethylaminoethyl acrylate, N,N-dimethylaminopropyl acrylate, N-vinyl pyrrolidone, N-vinyl caprolactam, and the like, and mixtures thereof.

Non-polar Ethylenically Unsaturated Monomers: The non-polar ethylenically unsaturated monomer is a monomer whose homopolymer has a solubility parameter as measured by the Fedors method (see Polymer Handbook, Bandrup and Immergut) of not greater than 10.50 and a Tg greater than 15°C. The non-polar nature of this monomer tends to improve the low energy surface adhesion of the adhesive. These non-polar ethylenically unsaturated monomers are selected from the group consisting of alkyl(meth)acrylates, N-alkyl(meth)acrylamides, and combinations thereof. Illustrative examples include, but are not limited to, 3,3,5-trimethylcyclohexyl acrylate, 3,3,5-trimethylcyclohexyl methacrylate, cyclohexyl acrylate, cyclohexyl methacrylate, isobornyl acrylate, isobornyl methacrylate, N-octyl acrylamide, N-octyl methacrylamide or combinations thereof. Optionally, from 0 to 25 parts by weight of a non-polar ethylenically unsaturated monomer may be added.

Tackifiers: In some embodiments, tackifiers are added to the adhesive and can include terpene phenolics, rosins, rosin esters, esters of hydrogenated rosins, synthetic hydrocarbon resins and combinations thereof. These provide good bonding characteristics on low energy surfaces. Hydrogenated rosin esters and hydrogenated C9 aromatic resins are useful tackifiers in some embodiments, because of performance advantages that include high levels of "tack", outdoor durability, oxidation resistance, and limited interference in post crosslinking of acrylic PSAs.

Tackifiers may be added at a level of about 1 to about 65 parts per 100 parts of the monofunctional acrylate or methacrylate ester of a non-tertiary alkyl alcohol, the polar monomer, and the nonpolar ethylenically unsaturated monomer to achieve desired "tack". Preferably, the tackifier has a softening point of about 65 to about 1OO.degree. C. However, the addition of tackifiers can reduce shear or cohesive strength and raise the Tg of the acrylic PSA, which is undesirable for cold temperature performance.

Crosslinkers: In one embodiment, crosslinkers are added to the adhesive. In order to increase the shear or cohesive strength of acrylic pressure-sensitive adhesives, a crosslinking additive may be incorporated into the PSA. Two main types of crosslinking additives are commonly used. The first crosslinking additive is a thermal crosslinking additive such as a multifunctional aziridine. One example is 1,1'-(1,3-phenylene dicarbonyl)-bis-(2-methylaziridine) (CAS No. 7652-64-4), referred to herein as "bisamide". Such chemical crosslinkers can be added into solvent-based PSAs after polymerization and activated by heat during oven drying of the coated adhesive.

In another embodiment, chemical crosslinkers that rely upon free radicals to carry out the crosslinking reaction may be employed. Reagents such as, for example, peroxides serve as a source of free radicals. When heated sufficiently, these precursors will generate free radicals, which bring about a crosslinking reaction of the polymer. A common free radical generating reagent is benzoyl peroxide. Free radical generators are required only in small quantities, but generally require higher temperatures to complete the crosslinking reaction than those required for the bisamide reagent.

In certain embodiments, the adhesive can be a heat-activated adhesive, such as hot-melt adhesive. Heat-activated adhesives are non-tacky at room temperature but become tacky and capable of bonding to a substrate at elevated temperatures. These adhesives usually have a glass transition temperature (Tg) or melting point (Tm) above room temperature. When the temperature is increased above the Tg or Tm, the storage modulus usually decreases and the adhesive becomes tacky.

In some embodiments, the adhesive diffuses visible light. As mentioned before, diffusion can be accomplished by creating surface diffusers, bulk diffusers, and embedded diffusers.

## Ultraviolet Absorbers

In certain embodiments, the adhesives and other layers or elements of the film constructions of the present disclosure may contain ultraviolet absorbers. In certain preferred embodiments, the UV absorbers are incorporated in the window film PSA which is the first layer of the LRF exposed to sunlight, thereby protecting the other layers of the redirecting film assembly. Ultraviolet absorbers function by preferentially absorbing ultraviolet radiation and dissipating it as thermal energy. Suitable UVAs may include: benzophenones (hydroxybenzophenones, e.g., Cyasorb 531 (Cytec)), benzotriazoles (hydroxyphenylbenzotriazoles, e.g., Cyasorb 5411, Tinuvin 329 (Ciba Geigy)), triazines (hydroxyphenyltriazines, e.g., Cyasorb 1164), oxanilides, (e.g., Sanuvor VSU (Clariant)) cyanoacrylates (e.g., Uvinol 3039 (BASF)), or benzoxazinones. Suitable benzophenones include, CYASORB UV-9 (2-hydroxy-4-methoxybenzophenone, CHIMASSORB 81 (or CYASORB UV 531) (2 hyroxy-4 octyloxybenzophenone). Suitable benzotriazole UVAs include compounds available from Ciba, Tarrytown, N.Y. as TINUVIN P, 213, 234, 326, 327, 328, 405 and 571, and CYASORB UV 5411 and CYASORB UV 237. Other suitable UVAs include CYASORB UV 1164 (2-[4,6-bis(2,4-dimethylphenyl)-1,3,5-triazin-2yl]-5(oxctyloxy) phenol (an exemplary triazine) and CYASORB 3638 (an exemplary benzoxiazine).

Hindered amine light stabilizers (HALS) are efficient stabilizers against light-induced degradation of most polymers. HALS do not generally absorb UV radiation, but act to inhibit degradation of the polymer. HALS typically include tetra alkyl piperidines, such as 2,2,6,6-tetramethyl-4-piperidinamine and 2,2,6,6-tetramethyl-4-piperidinol. Other suitable HALS include compounds available from Ciba, Tarrytown, N.Y. as TINUVIN 123, 144, and 292.

The UVAs and HALS disclosed explicitly here are intended to be examples of materials corresponding to each of these two categories of additives. The present inventors contemplate that other materials not disclosed here but known to those skilled in the art for their properties as UV absorbers or hindered amine light stabilizers can be used in the constructions of this disclosure.

Light Redirecting Film Configurations

Room-Facing Configurations

A room-facing light redirecting assembly is shown in Figure 29(a). In this embodiment, the redirecting film with the structures oriented towards the room is bonded to the cover film. The cover film may include diffusing properties depending on the optical performance of the light redirecting microstructure. The diffuser may be surface, bulk, or embedded diffuser. Diffusion may also be included in the adhesive. The assembly may be mounted to a window or glazing using window film adhesive.

Sun-Facing Configurations

A sun-facing light redirecting configuration is shown in Figure 29(b). In that embodiment, the microstructured prismatic elements are oriented towards the incoming sunlight. In this embodiment, the microstructure substrate may also have diffusing properties integrated into it. In certain embodiments, diffusive properties can be achieved by coating a surface diffuser on the substrate side opposing the microstructured prismatic elements. This substrate could also include bulk diffusion properties. This substrate may have a window film adhesive coated on the opposing face to attach to a glazing.

In some embodiments, the present disclosure is directed to a window comprising any of the films described above.

In certain embodiments, such as in the above room-facing and sun-facing constructions, diffusion may be incorporated in the substrates and/or adhesives. Diffusers may be surface, bulk, or embedded diffusers.

In some embodiments, the window film adhesive diffuses visible light. As mentioned before, diffusion can be accomplished by creating surface diffusers, bulk diffusers, and embedded diffusers.

In yet other embodiments constructions as described in the preceding paragraph may have a diffuser (bulk, surface, or embedded) on what originally was a see-through region.

**Examples**

These examples are merely for illustrative purposes only and not meant to be limiting on the scope of the appended claims. All parts, percentages, ratios, etc., in the examples and the rest of the specification are by weight unless otherwise indicated.

**Table 1:** Materials.

| Component | Supplier | Description | % Solids |
|---|---|---|---|
| Polyacrylate PSA | 3M Company (St. Paul MN) | Terpolymer of isooctyl acrylate (50%), ethyl acrylate (40%), and acrylic acid (10%) having an intrinsic viscosity of 1.9. | 21.2 |
| Uvacure 1500 | Cytec Industries (Woodland Park NJ) | Cycloaliphatic Diepoxide | 100 |
| DEP | Thirumalai Chemicals (Mumbai, India) | Diethyl phthalate | 100 |
| Toluene | Aldrich Chemical (Milwaukee WI) | Solvent | 0 |

(continued)

| Component | Supplier | Description | % Solids |
|---|---|---|---|
| Methanol | Aldrich Chemical (Milwaukee WI) | Solvent | 0 |
| Ethyl Acetate | Aldrich Chemical (Milwaukee WI) | Solvent | 0 |
| Uvacure 1600 | Cytec Industries (Woodland Park NJ) | Diaryl Iodonium Hexafluoroantimonate Salt, Cationic Photoinitiator | 100 |
| Additol ITX | Cytec Industries (Woodland Park NJ) | Isopropylthioxanthone | 100 |
| MX300 | Soken Chemical (Japan) | Crosslinked poly(methyl methacrylate) spherical beads. The beads have a nominal diameter of 3 microns. | 100 |
| PHOTOMER 6210 (R1) | IGM Resins Charlotte, NC | Aliphatic urethane diacrylate | |
| SR238 (R2) | Sartomer Americas Exton, PA | Hexanediol diacrylate | |
| CN2920 (R3) | Sartomer Americas Exton, PA | Aliphatic urethane acrylate oligomer | |
| SR9003 (R4) | Sartomer Americas Exton, PA | Propoxylated neopentyl glycol diacrylate | |
| SR351 (R5) | Sartomer Americas Exton, PA | Trimethylolpropane triacrylate | |
| RHOPLEX 3208 (API) | Dow Chemical Company, Midland, MI | Acrylic Primer | |
| IRGACURE 4265 (PI2) | BASF Corp. Florham Park, NJ | Photo initiator | |
| TPO | | Photo initiator | |

**Microstructured optical films used in the examples:**

Film A is a microstructured film made according to the process described in US5763049, incorporated herein by reference, using a master tool produced according to the process described in US2009/0041553, incorporated herein by reference. The microstructured prismatic elements are aligned linearly in the down-web (machine direction) and are shaped in cross-section as shown in Fig. 6. The plano side of the polyester substrate is primed to promote adhesion.

Film B is a microstructured film made according to the process described in US5763049 using a master tool produced according to the process described in US2009/0041553. The microstructured prismatic elements are aligned linearly in the down-web (machine direction) and are shaped in cross-section as shown in Fig. 7. The plano side of the polyester substrate is primed to promote adhesion.

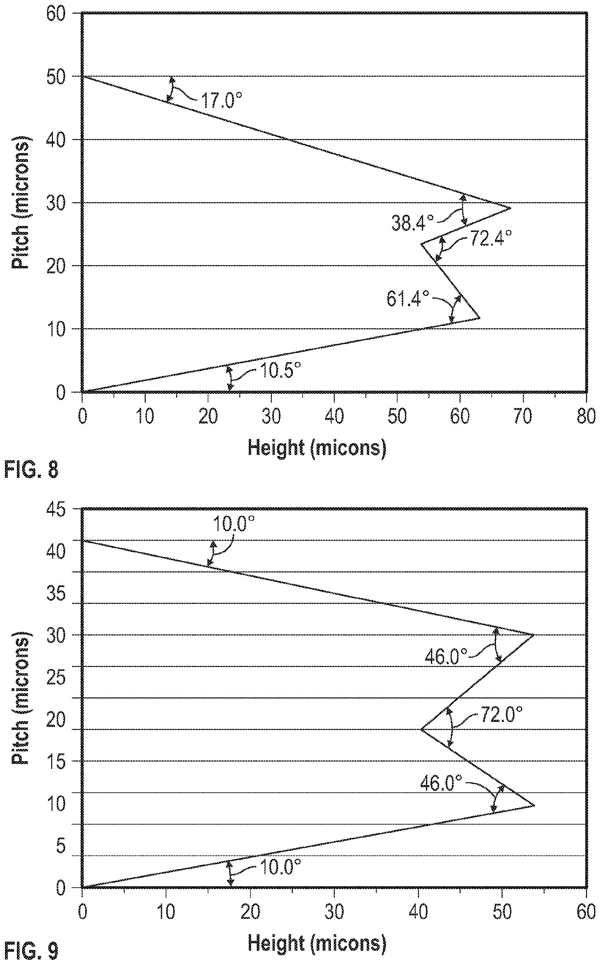

Film C is a microstructured film made according to the process described in US5763049 using a master tool produced according to the process described in US2009/0041553. The microstructured prismatic elements are aligned linearly in the down-web (machine direction) and are shaped in cross-section as shown in Fig. 8. The plano side of the polyester substrate is primed to promote adhesion.

Film D is a microstructured film made according to the process described in US5763049 using a master tool produced according to the process described in US2009/0041553. The microstructured prismatic elements are aligned linearly in the down-web (machine direction) and are shaped in cross-section as shown in Fig. 9. The plano side of the polyester substrate is primed to promote adhesion.

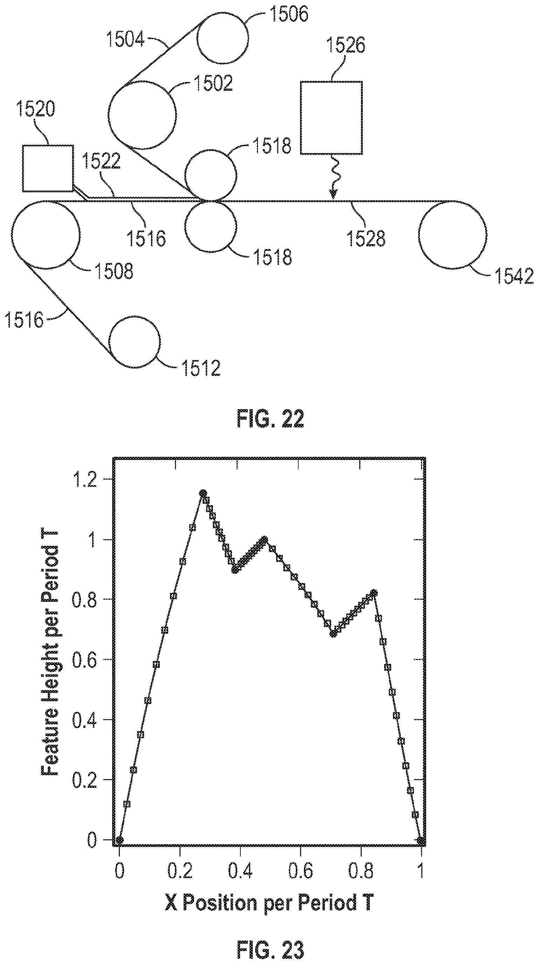

Film E (prophetic) is a microstructured film that can be made according to the process described in US5763049 using a master tool produced according to the process described in US2009/0041553. The microstructured prismatic elements are shaped in cross-section as shown in Fig. 23, as described in US patent application 62/094,626, filed 19 December 2014, which is incorporated herein by reference. The plano side of the polyester substrate is primed to promote adhesion.

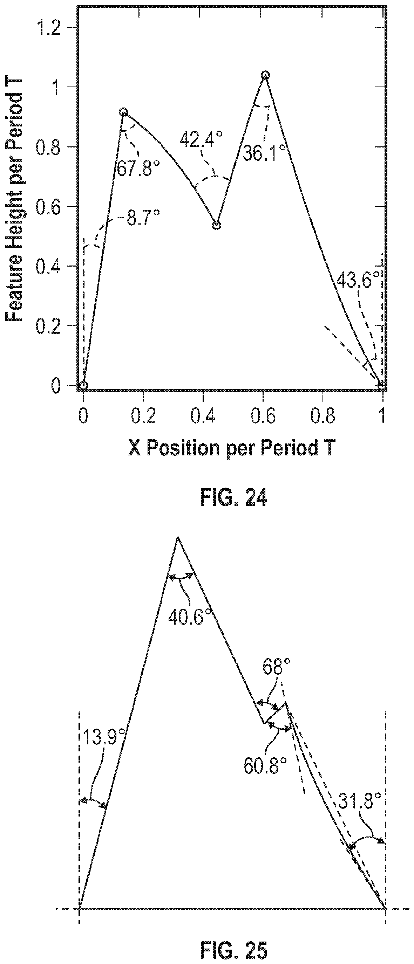

Film F (prophetic) is a microstructured film that can be made according to the process described in US5763049 using a master tool produced according to the process described in US2009/0041553. The microstructured prismatic elements are shaped in cross-section as shown in Fig. 24, as described in US patent application 62/094,626, filed 19 December 2014. The plano side of the polyester substrate is primed to promote adhesion.

Film G (prophetic) is a microstructured film that can be made according to the process described in US5763049 The microstructured prismatic elements are shaped in cross-section as shown in Fig. 25, as described in US patent application 62/094,626, filed 19 December 2014. The plano side of the polyester substrate is primed to promote adhesion.

## Fabrication of a cover film having a microstructured diffusing layer

A microreplicated diffusing layer was applied to a 2 mil PET substrate as described in U.S. Patent No. 8,657,472, which is incorporated herein by reference in its entirety. The diffusing layer was fabricated from a resin comprising 60 wt% R1, 20 wt% R2, and 20 wt% R5. To this resin mixture, 0.5 wt% TPO photoinitiator was added based on the combined resin weight. The diffusing layer was applied by coating the substrate with the resin, contacting a microstructured tool with the resin, and curing the resin while in contact with the tool using a UV lamp. The resulting cover film had a thickness of 57.6 microns, the visible light transmission was 93.3%, the haze was 33.1%, and the clarity was 15.5%.

## Light Redirecting Microstructured Prismatic Film B

The supporting substrate was a 2-mil biaxially-oriented PET film having an adhesion promoting primer coating comprising API applied to both sides. The replicating resing comprised 60 wt% Photomer 6010, 20 wt% SR602, 4 wt% SR601, 8 wt% SR351, 8 wt% Etermer 201. Irgacture 4265 was added as photoinitiator at 0.5 wt% of the total resin weight. The replicating resin was applied to the PET substrate in a manner and rate such that the resin was evenly distributed across the region to be replicated. Replication of the resin was conducted at 30 feet per minute (fpm) on a tool heated to 125°F. The tool, having the same but complimentary shape as the desired daylight redirecting structure, had been previously fabricated using a diamond-turning process. The desired periodic structure comprised two peaks and four facets per period with one facet per side of the function.

The resulting light redirecting prismatic structure is described in Fig. 7. Radiation from a Fusion "D" lamp operating at 600 W/in was transmitted through the film to cure the resin while in contact with the tool. The replicated Daylight Redirection Microstructured Template Film (replicated resin on PET substrate) was then removed from the tool and wound into a roll in preparation for further processing.

## Light Redirecting Microstructured Prismatic Film A

The supporting substrate used was a 2-mil biaxially-oriented PET film having an adhesion promoting primer coating comprising AP1 applied to both sides. The replicating resin was a 75/25 blend of R1 and R2 with 0.5% photoinitator PI2. The replicating resin was applied to the PET substrate in a manner and rate such that the resin was evenly distributed across the region to be replicated. Replication of the resin was conducted at 30 fpm on a tool heated to 125 °F. The tool, having the same but complimentary shape as the desired daylight redirecting structure, had been previously fabricated using a diamond-turning process. The desired periodic structure comprised two peaks and four facets per period with one facet per side of the function.

The resulting daylight redirecting film is further described in Example No. 2 of U.S. provisional application No. 62/066302 titled "Sun-Facing Light Redirecting Film with Reduced Glare," filed on October 20, 2014. Diffuser Films (WO20164621A1) which is hereby incorporated herein by reference in its entirety. Radiation from a Fusion "D" lamp operating at 600 W/in was transmitted through the film to cure the resin while in contact with the tool. The replicated Daylight Redirection Microstructured Template Film (replicated resin on PET substrate) was then removed from the tool and wound into a roll in preparation for further processing.

**Method of Making a Daylight Redirecting Film Assembly**

Adhesive Solution 1 (containing no diffusion beads):

An adhesive solution was prepared by mixing the components in Table 2. The adhesive solutions consisted of 11% solids.

**Table 2:** Adhesive formulation.

| Component | Weight (Kg) |
|---|---|
| Ethyl Acetate | 57.18 |
| Toluene | 19.68 |
| Methanol | 14.09 |
| Polyacrylate PSA solution | 46.32 |
| Uvacure 1500 | 4.545 |
| Uvacure 1600 | 0.636 |
| Additol ITX | 0.0182 |
| DEP | 0.755 |

This adhesive solution represents a solvent based adhesive that upon drying may be cured by exposure to actinic radiation to form an interpenetrating network (IPN). The composition of the adhesive on a dry basis is provided in Table 3.

**Table 3:** Adhesive formulation in weight percent.

| Component | Weight (%) |
|---|---|
| Polyacrylate PSA | 62.3% |
| Uvacure 1500 | 28.8% |
| Uvacure 1600 | 4.03% |
| Additol ITX | 0.115% |
| DEP | 4.78% |

Adhesive Solution 2 (containing 5 wt% diffusion beads):

An adhesive solution was prepared by mixing the components shown in Table 4. The adhesive solution was 11% solids.

**Table 4:** Adhesive formulation.

| Component | Weight (Kg) |
|---|---|
| Ethyl Acetate | 70.55 |
| Toluene | 19.68 |
| Methanol | 14.09 |
| Polyacrylate PSA solution | 46.32 |
| Uvacure 1500 | 4.545 |
| Uvacure 1600 | 0.636 |

(continued)

| Component | Weight (Kg) |
|---|---|
| Additol ITX | 0.0182 |
| DEP | 0.755 |
| MX300 | 0.827 |

This adhesive solution represents a solvent based adhesive that upon drying may be cured by exposure to actinic radiation to form an interpenetrating network (IPN). The composition of the adhesive on a dry basis is provided in Table 5.

**Table 5:** Adhesive formulation in weight percent.

| Component | Weight (%) |
|---|---|
| Polyacrylate PSA | 59.1% |
| Uvacure 1500 | 27.4% |
| Uvacure 1600 | 3.83% |
| Additol ITX | 0.110% |
| DEP | 4.55% |
| MX300 | 4.98% |

Adhesive Solution 3 (contianing 9.5 wt% diffusion beads):

An adhesive solution was prepared by mixing the components shown in Table 6. The adhesive solution was 11% solids.

**Table 6:** Adhesive formulation.

| Component | Weight (Kg) |
|---|---|
| Ethyl Acetate | 70.55 |
| Toluene | 19.68 |
| Methanol | 14.09 |
| Polyacrylate PSA solution | 46.32 |
| Uvacure 1500 | 4.545 |
| Uvacure 1600 | 0.636 |
| Additol ITX | 0.0182 |
| DEP | 0.755 |
| MX300 | 1.655 |

This adhesive solution represents a solvent based adhesive that upon drying may be cured by exposure to actinic radiation to form an interpenetrating network (IPN). The composition of the adhesive on a dry basis is provided in Table 7.

**Table 7:** Adhesive formulation in weight percent.

| Component | Weight (%) |
|---|---|
| Polyacrylate PSA | 56.34% |

(continued)

| Component | Weight (%) |
|---|---|
| Uvacure 1500 | 26.08% |
| Uvacure 1600 | 3.65% |
| Additol ITX | 0.10% |
| DEP | 4.33% |
| MX300 | 9.49% |

Coating and Lamination Process for Making a Daylight Redirecting Film Assembly

**Example 1**

Adhesive solution 1 prepared above was coated onto the plano side of a 50 micron (2 mil) PET cover film which was primed on both plano sides. The adhesive solution was coated on the cover film using a slot-type die at a width of 8 in (20.32 cm) and a web speed of 25 ft/min (7.62 m/min). The adhesive solution was delivered using a gear driven pump at specified flow rates to provide coatings of desired thickness. Samples with dry adhesive coating thickness of 3, 4, 6, and 8 micron were produced. Residual solvent was removed from the coated film in a convection oven maintained at a temperature of 150°F (65.6 °C); the oven length was 30 ft (9.14 m).

Microstructured film B was conveyed to a lamination station and laminated to the adhesive side of the PET cover film with the microstructured prismatic element side of the film in direct contact with the adhesive coating. The laminator was configured with a rubber roll (Shore A Durometer of 68) nipped against a steel roll; the nip pressure was maintained at approximately 60 psi.

The laminate was conveyed to a UV curing station, where it was exposed to actinic radiation. The radiation source was positioned so that the adhesive was irradiated through the film comprising the microstructured prismatic elements. The curing station was comprised of a Fusion F600 (Fusion UV Systems, Gaithersburg MD) and a temperature controlled steel backup roll. The Fusion UV source was configured with a D Bulb and an aluminum reflector with power setting range of 60-100%. The results are provided in Figures 14-17.

**Example 2**

Adhesive solution 1 was coated using a slot-type die onto the plano side of a 35.5 micron thick (1.4 mil) PET cover film which was primed on both plano sides. The adhesive solution was delivered using a gear driven pump at specified flow rates to provide coatings of desired thickness. Samples with dry adhesive coating thickness of 3.0 micron, 3.4 micron and 4.5 micron were produced. Residual solvent was removed from the coated film in a convection oven maintained at a temperature of 150°F (65.6 °C); the oven length was 30 ft (9.14 m).

Microstructured film A was conveyed to a lamination station and laminated to the adhesive side of the PET cover film with the microstructured prismatic element side of the film in direct contact with the adhesive coating. The laminator was configured with a rubber roll (Shore A Durometer of 80) nipped against a steel roll; the nip pressure was adjusted to 90psi to imbed the microstructured prismatic elements into the adhesive.

The laminate was conveyed to a UV curing station, where it was exposed to actinic radiation. The radiation source was positioned so that the adhesive was irradiated through the film comprising the microstructured prismatic elements. The curing station was comprised of a Fusion UV System (Gaithersburg MD) and a temperature controlled steel backup roll. The Fusion UV source was configured with a D Bulb and an aluminum reflector with power setting range of 70%. The UV backup roll was maintained at a temperature of 70 °F (21.1°C).

**Table 8:** Peel strength and Glare of Example 2 at different adhesive thickness.

| Adhesive thickness (microns) | Peel strength (gram/inch) | Max Direct Glare (% of incident) |
|---|---|---|
| 3.0 | 174 | 20.1 |
| 3.4 | 203 | 16.1 |
| 4.5 | 240 | 14.6 |

**Example 3**

A window film pressure sensitive adhesive was coated on the first plano side of a DuPont Melinex 454 PET cover film which was 75 micron (3 mil) thick and a release liner was then laminated to the window film adhesive to produce a 3-layer laminate.

Adhesive solution 1 was coated on the second surface of the Melinex 454 film of the 3-layer laminate using a slot-type die. The adhesive solution was delivered using a gear driven pump at specified flow rate to provide a 4.5 micron dry adhesive coating thickness. Residual solvent was removed from the coated film in a convection oven maintained at a temperature of 150°F (65.6 °C); the oven length was 30 ft (9.14 m).

Microstructured film A was conveyed to a lamination station and laminated to the adhesive side of the PET cover film with the microstructured prismatic element side of the film in direct contact with the adhesive coating. The laminator was configured with a rubber roll (Shore A Durometer of 80) nipped against a steel roll; the nip pressure was adjusted to 90psi to imbed the microstructured prismatic elements into the adhesive.

The laminate was conveyed to a UV curing station, where it was exposed to actinic radiation. The radiation source was positioned so that the adhesive was irradiated through the film comprising the microstructured prismatic elements. The curing station was comprised of a Fusion UV System (Gaithersburg MD) and a temperature controlled steel backup roll. The Fusion UV source was configured with a D Bulb and an aluminum reflector with power setting range of 70%. The UV backup roll was maintained at a temperature of 70 °F (21.1°C).

**Example 4**

A window film adhesive was coated on the first major plano side of a DuPont Melinex 454 PET cover film which was 75 micron (3 mil) thick and a release liner was laminated to the window film adhesive to produce a 3-layer laminate.

Adhesive solution 2 was coated on the second surface of the Melinex 454 film of the 3-layer laminate using a slot-type die. The solution was delivered using a gear driven pump at specified flow rate to provide a 4.5 micron dry adhesive coating thickness. Residual solvent was removed from the coated film in a convection oven maintained at a temperature of 150°F (65.6 °C); the oven length was 30 ft (9.14 m).

Microstructured film A was conveyed to a lamination station and laminated to the adhesive side of the PET cover film with the microstructured prismatic element side of the film in direct contact with the adhesive coating. The laminator was configured with a rubber roll (Shore A Durometer of 80) nipped against a steel roll; the nip pressure was adjusted to 90psi to imbed the microstructured prismatic elements into the adhesive.

The laminate was conveyed to a UV curing station, where it was exposed to actinic radiation. The radiation source was positioned so that the adhesive was irradiated through the film comprising the microstructured prismatic elements. The curing station was comprised of a Fusion UV System (Gaithersburg MD) and a temperature controlled steel backup roll. The Fusion UV source was configured with a D Bulb and an aluminum reflector with power setting range of 70%. The UV backup roll was maintained at a temperature of 70 °F (21.1°C).

**Example 5**

A window film adhesive was coated on the first major plano side of a DuPont Melinex 454 PET cover film which was 75 micron (3 mil) thick and a release liner was laminated to the window film adhesive to produce a 3-layer laminate.

Adhesive solution 3 was coated on the second surface of the Melinex 454 film of the 3-layer laminate using a slot-type die. The solution was delivered using a gear driven pump at specified flow rate to provide a 5.5 micron dry adhesive coating thickness. Residual solvent was removed from the coated film in a convection oven maintained at a temperature of 150°F (65.6 °C); the oven length was 30 ft (9.14 m).

Microstructured film A was conveyed to a lamination station and laminated to the adhesive side of the PET cover film with the microstructured prismatic element side of the film in direct contact with the adhesive coating. The laminator was configured with a rubber roll (Shore A Durometer of 80) nipped against a steel roll; the nip pressure was adjusted to 90psi to imbed the microstructured prismatic elements into the adhesive.

The laminate was conveyed to a UV curing station, where it was exposed to actinic radiation. The radiation source was positioned so that the adhesive was irradiated through the film comprising the microstructured prismatic elements. The curing station was comprised of a Fusion UV System (Gaithersburg MD) and a temperature controlled steel backup roll. The Fusion UV source was configured with a D Bulb and an aluminum reflector with power setting range of 70%. The UV backup roll was maintained at a temperature of 70 °F (21.1°C). Results are in Tables 9 and 10.

**Testing and Aging of Daylight Redirecting Film Assembly:**

Measurement of Interlayer Peel Strength of Daylight Redirecting Film Assembly:

Peel force was measured using an IMASS SP-2000 tester (available from IMASS Inc., Accord MA). Test strips 1 inch (2.54 cm) wide and approximately 10 in (25.4 cm) long were cut parallel and perpendicular to the prism orientation of the bottom prism film. Laminate strips were adhered to the tester platform using 1 inch (2.54 cm) wide Scotch double-coated tape (available as Scotch 665 from 3M Company, St. Paul MN). The tester was configured to measure the 180 degree peel force. Samples were oriented so that the plano side of the bottom prism film was adhered to the tester platform and the top film was attached to the force balance. The load cell capacity was 10 $lb_f$ (44.5 N). Peel force was measured at a rate of 12 in/min (30.5 cm/min). Data were collected after an initial delay of 2 seconds. Measurements were then averaged over a test period of 20 seconds. For each sample, at least three test strips with each of the parallel and perpendicular microstructured prismatic element orientations were tested.

Measurement of Haze and Clarity:

Haze and clarity values disclosed herein were measured using a Haze-Gard Plus haze meter (BYK-Gardiner, Silver Springs, Md.) according to the procedure described in ASTM D1003. Optical haze, as used herein, is defined as the ratio of the transmitted light that deviates from the normal direction by more than 4 degrees to the total transmitted light. Optical clarity is defined as $(T_1-T_2)/(T_1+T_2)$, where $T_1$ is the transmitted light that deviates from the normal direction between zero and 0.7 degrees, and $T_2$ is the transmitted light that lies between 1.6 and 2 degrees from the normal direction. In all cases, the optical films were measured with the cover film of the laminate toward the light source.

Environmental Aging of Daylight redirecting film assembly:

To test the environmental performance, the daylight redirecting film assemblies, were placed in an environmental chamber (Envirotronics, Grand Rapids MI). The chamber was maintained at 65°C and 95% RH. Samples were typically aged for a specified period. Unaged and aged daylight redirecting film assemblies were cut and characterized according to the testing procedures previously defined.

**Glare measurement data**

The optical performance of various light redirecting structures as a function of illumination (input) angle was measured using an imaging sphere for scatter and appearance measurement (IS-SA) from Radiant Vision Systems (Richmond, WA) model IS-SA-13-1. For each design, the hemispherical angular distribution of the transmitted light (BTDF-Bidirectional Transmission Distribution Function) was measured for illumination elevation angles between 0 (normal, head on) and 75 degrees in 5 degree increment. For this measurement, the azimuth of illumination was constrained to be 0 deg with respect to the surface normal of the window to which the light redirecting structures are attached.

The redirected light was measured as a function of the output angles $\theta_x$ and $\theta_y$, the Cartesian components of spherical coordinates $\theta$ and $\phi$ where the x and y subscripts refer to the horizontal and vertical directions respectively. ($\theta_x = \theta \cos\phi$ and $\theta_y = \theta \sin\phi$ and $\phi = 0$ by definition when the output angle falls on the positive x axis.)

Light going over and under the horizon is more or less useful and so we define zones to group light that is similarly useful. We define each zone by maximum and minimum limits on $\theta_y$. Then the zonal transmittance can be defined to be the integral of the BTDF over the solid angle defined by that zone, that is, for all $\theta_x$ for each $\theta_y$ between $\theta_{y\,min}$ and $\theta_{y\,max}$. The resulting integrand is called the zonal transmission and is a fraction of the total amount of light incident on the structures.

In particular, light that is directed below horizontal is undesirable. If it is directed down at a steep angle, it is wasted on the floor close to the window. If it is directed down but at a less steep angle, it is not only wasted but it becomes glare, which is bothersome to room occupants.

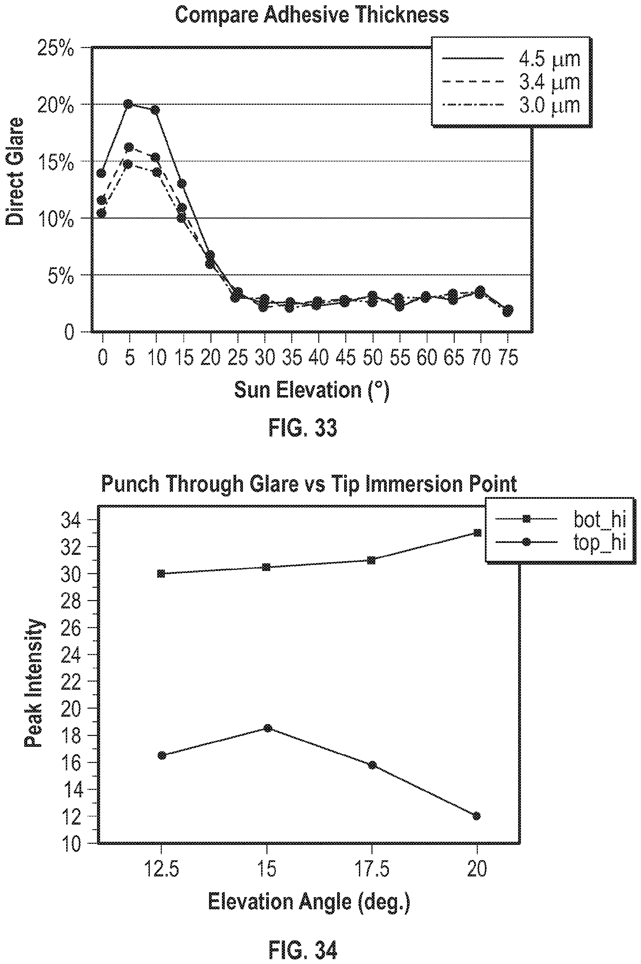

Direct Glare is defined as the fraction of light transmitted between 0 and 15 deg downwards and was determined for each structure and illumination elevation angle from the measured BTDF. Fig. 33 shows the amount of Direct Glare as function of sun elevation for three light directing films with varying adhesive thickness. As the adhesive thickness is increased, the Direct Glare also increases. Also, as shown in Table 4, as the adhesive thickness is increased, the interlayer peel strength increased.

**Color measurement data**

We choose to quantify the color shift as the distance between the input color and the transmitted color as plotted on the perceptively uniform CIE 1976 UCS Chromaticity Diagram, which has the coordinates u' and v'. For example we can measure the color of the input illumination with a Minolta CS-100 Chroma Meter as scattered by a flat white object and compare that chromaticity vs. the chromaticity at a particular output angle by calculating the color shift as the distance between the two coordinates. We define $\Delta u'v' = \sqrt{(u' - u'_0)^2 + (v' - v'_0)^2}$ where $u'_0$ and $v'_0$ are the measured chromaticity of the light transmitted through the window but not through the light redirecting films and as scattered from a flat-white object. Therefore $S_0$ describes the color shift away from the color of the input light.

For example Table 9 contains measurements comparing two types of light redirecting films mounted in a south facing window. At the time of the measurement the sun elevation was 60.91 deg and the sun azimuth was 197.43 deg. The films were observed from 25 ft away from the windows. The measurement spot was 9 ft above the floor. The measurement of the input color is listed at the bottom as the "Window transmission" and the last column shows the calculated color shift from this color. The "Left DRF" has a larger color shift than the "Right DRF." These chromaticity measurements are plotted in Fig. 35. Lines connect the two measured points. The length of these lines are equal to □u'v'.

Table 9: Peel strength at different bead loading %.

| Adhesive Thickness (microns) | % Beads | Average Peel (g/inch) |
|---|---|---|
| 4.5 | 0 | 362 |
| 4.5 | 5 | 182 |
| 5.5 | 10 | 223 |

Table 10: Color measurements at different bead loading %.

| | Y | u' | v' | □u'v' |
|---|---|---|---|---|
| No beads | 9010 | 0.242 | 0.498 | 0.028474 |
| 5% beads | 7110 | 0.229 | 0.494 | 0.018092 |
| Window transmission* | 4690 | 0.214 | 0.504 | 0 |
| *as scattered from a flat white surface an hour later. | | | | |

## Examples of sealing the edges of microstructured optical constructions

Unless otherwise noted, all parts, percentages, and ratios reported in the following examples are on a weight basis. Reagents in Table 11 were purchased from Sigma Aldrich Company, St. Louis, MO, unless otherwise noted.

Table 11. Sealing materials and sources

| Sealing material (Trade name or item number) | Source (Location) |
|---|---|
| Beeswax (#3153) | Dritz (Spartanburg, SC) |
| Paraffin wax (Gulf Wax) | Royal Oak LLC (Roswell, GA) |
| Accu-Lube Stick Lubricant | ITW ROCOL North America (Glenview, IL) |
| Crayon | Crayola, LLC (Easton, PA) |
| Wax-on | A&R Allied Enterprise, Inc. (Saddle Brook, NJ) |
| Anti-Chafe Balm stick | Body Glide LLC (Bellevue, WA) |
| 3M Autobody Sealant Clear (#08302) | 3M Company (St. Paul, MN) |
| Johnson's Baby Shampoo | Johnson & Johnson (New Brunswick, NJ) |
| 3M Scotch-Weld Instant Adhesive CA8 | 3M Company (St. Paul, MN) |
| 3M Edge Sealer 3950 | 3M Company (St. Paul, MN) |
| 3M Screenprinting Ink 883i Blue | 3M Company (St. Paul, MN) |
| 3M Process Color Series 880i | 3M Company (St. Paul, MN) |

(continued)

| Sealing material (Trade name or item number) | Source (Location) |
|---|---|
| 3M 3950 Edge sealer | 3M Company (St. Paul, MN) |
| 3731 3M Hot Melt Adhesive in stick form | 3M Company (St. Paul, MN) |
| 3748 3M Hot Melt Adhesive in stick form | 3M Company (St. Paul, MN) |
| 3764 3M Hot Melt Adhesive in stick form | 3M Company (St. Paul, MN) |
| 3779 3M Hot Melt Adhesive in stick form | 3M Company (St. Paul, MN) |
| 3792 3M Hot Melt Adhesive in stick form | 3M Company (St. Paul, MN) |
| 850 3M single-sided tape with 0.92 PET backing | 3M Company (St. Paul, MN) |
| 924 3M acrylic adhesive transfer tape on liner | 3M Company (St. Paul, MN) |
| CA-8 3M cyanoacrylate adhesive | 3M Company (St. Paul, MN) |
| DP100 3M 2-part epoxy | 3M Company (St. Paul, MN) |
| 31014 Oatey PVC Pipe Cement | Oatey SCS (Cleveland, OH) |
| 31019 Oatey PVC Pipe Cement | Oatey SCS (Cleveland, OH) |
| 31172 Oatey PVC Pipe Cement | Oatey SCS (Cleveland, OH) |
| 25605 Hercules Plumbers Caulk | Oatey SCS (Cleveland, OH) |

**Preparation of structured light redirecting film laminate**

In the Examples below, the term "film laminate" is used interchangeably with the term "film construction." The structured light redirecting film laminate was made following generally the methods and processes described in Example 5 above.

**Methods of depositing sealant on the edge of the light redirecting film laminate**

**Method A.**

The structured light redirecting film laminate as prepared above was cut into 2" x 3" samples and given a letter identification. The sealant material was rubbed four-to-five times along the long edge. Material deposited on the surface of the film laminate was cleaned by rubbing off with a clean paper towel. Examples B through H were prepared in this manner. Following the deposition of the sealant on both the long edges of the film, one of the treated edges was dipped in to water to determine the efficacy of the sealing process.

**Method B.**

The sealant material available in a squeeze tube was extruded on to the edge of the structured light redirecting film laminate so as to coat and seal the edge. Excess material was wiped away with a paper towel.

**Method C.**

The sealant material was applied to the cut edge of the film construction with an applicator. The sealant was allowed to cure for 5 min. Excess material was wiped away with a paper towel.

**Method D**

The structured light directing film was placed on a cutting mat and a 10" strip of 2" blue masking tape applied to the surface of the film. The masking tape was oriented such that the 10" length of the tape was perpendicular to the direction of the grooves of the structured light redirecting film. A sharp razor blade was used to cut through the masking tape creating a fresh cut surface. The sealant was applied to the cut surface with applicator (such as a cotton-tipped applicator, a fiber-tipped applicator, or a foam-tipped applicator) in a manner to coat the freshly cut edge and excess sealant covering the surface of the masking tape. One type of applicator suitable for Method D is the Texwipe TX712A foam swab (Texwipe, Kernersville, NC). The sealant was allowed to dry or cure for a specified time and the masking tape removed. The structured light redirecting film was taped on the edges to prevent its movement.

**Method E**

The structured light redirecting film was placed on a glass surface and was cut using a hot knife.

**Measurement of water ingress**

The structured light redirecting film laminate as prepared above was cut into 2" x 3" samples. The triangular channels in the film laminate were oriented parallel to the short side. Care was taken to make sure that the sample was cut parallel to the direction of the channel or groves of the film laminate. A 4" diameter glass petri dish was half filled with tap water and the long edge of the film laminate was dipped into the water while keeping the film vertical. After 1 min, the sample was taken out and the length of channel filled with ingressed water due to capillary action was measured using a ruler. The number reported for "length ingressed" in Tables 1 and 2 is the average length of ingress in millimeters for the bulk of the channels in the sample, which was qualitatively evaluated.

Table 12. Water ingress into the channels of structured film laminate as a function of immersion time[#]

| Time (minutes) | Length ingressed (millimeters) |
| --- | --- |
| 1 | 10 |
| 2 | 22 |
| 3 | 32 |
| 4 | 42 |
| 5 | 50 |
| 6 | 60 |
| 10 | 85 |
| [#]2"x10" strips of film laminates were used to determine the water ingress length as a function of time | |

Table 13. Water ingress into channels of structured film laminate

| Example | Sealing material | Sealing material property | Application method | Length ingressed (millimeters) | Notes |
| --- | --- | --- | --- | --- | --- |
| A | | NA | NA | 11 | |
| B | None Bees wax | Solid | A | 0 | |
| C | Paraffin wax | Solid | A | 0 | |
| D | Acculube | Solid | A | 12 | |
| E | Crayon | Solid | A | 0 | |
| F | Wax-on | Solid | A | 0 | |
| G | Body Glide | Solid | A | 1 | |
| H | 3M Autobody clear | Liquid | B | 0 | |
| I | Baby shampoo | Liquid | C | 10 - 40 | |

(continued)

| Example | Sealing material | Sealing material property | Application method | Length ingressed (millimeters) | Notes |
|---|---|---|---|---|---|
| J | Scotch-Weld Adhesive (CA8) | Liquid | B | Sealant ingressed into the channel during the application process. | |
| K | Petroleum Jelly | Liquid | C | 0 | After one day, the petroleum jelly itself appeared to have ingressed into the channels leaving permanent mark |
| L | Petroleum Jelly | Liquid | C | 3 | |
| M | 3M 883 Ink | Liquid | C | 13 | Wiped the edge immediately after application. |
| N | 3M 883 Ink | Liquid | C | 0 | Allowed to cure 5 minutes, then wiped the edge clean. |
| O | 3M 883 Ink | Liquid | D | 0 | |
| P | 3M 3950 Edge sealer | Liquid | C | 24 | Wiped immediately after application. Allowed to cure for 5 min. Wiped immediately after application |
| Q | 3M 3950 Edge sealer | Liquid | D | 0 | Allowed to cure for 5 minutes |
| R | 3M 3950 Edge sealer | Liquid | D | 0 | Tape removed right after application of sealant. |
| S | 3M 880i toner | Liquid | C | 24 | Wiped the edge immediately after application. |
| T | 3M 880i toner | Liquid | C | 19 | Allowed to cure 5 minutes, then wiped the edge clean. |
| U | None | NA | E | 10 | |
| V | 3M 3950 Edge sealer | Liquid | C | 0 | Easy to apply, but strong objectionable solvent odor. |
| W | 3731 3M Hot Melt Adhesive in stick form | Solid | A | 0 | Inconsistent. |
| X | 3748 3M Hot Melt Adhesive in stick form | Solid | A | 0 | Inconsistent. |
| Y | 3764 3M Hot Melt Adhesive in stick form | Solid | A | 0 | Inconsistent |
| Z | 3779 3M Hot Melt Adhesive in stick form | Solid | A | 0 | Inconsistent. Worse than others. |

(continued)

| Example | Sealing material | Sealing material property | Application method | Length ingressed (millimeters) | Notes |
|---|---|---|---|---|---|
| AA | 3792 3M Hot Melt Adhesive in stick form | Solid | A | 0 | Inconsistent |
| AB | 3748 3M Hot Melt Adhesive in stick form | Solid | A | 0 | Inconsistent due to my crude method. Would need a hot-melt gun to repeatedly apply this as a hot-melt. |
| AC | 850 3M single-sided tape with 0.92 PET backing | Tape 1" wide | Folded over edge | 0 | Difficult to apply uniformly. Does not have a good aesthetic appearance. |
| AD | 924 3M acrylic adhesive transfer tape on liner | Tape 0.25" wide | Folded over edge | 0 | Difficult to apply uniformly. Does not have a good aesthetic appearance and edge is sticky. |
| AE | CA-8 3M cyanoacrylate adhesive | Liquid | C | 0 | Wick in to DRF inconsistently. Would need a higher viscosity for this to work. |
| AF | DP100 3M 2-part epoxy | Liquid | C | 0 | Difficult to apply uniformly. |
| AG | 31014 Oatey PVC Pipe Cement | Liquid | C | 0 | |
| AH | 31019 Oatey PVC Pipe Cement | Liquid | C | 0 | |
| AI | 31172 Oatey PVC Pipe Cement | Liquid | C | 0 | |
| AJ | 25605 Hercules Plumbers Caulk | Liquid | B | 0 | |

**Comparative Example**

As a Comparative Example, the edge of the structured light redirecting film laminate was sanded by hand using a 600 grit sandpaper, filling the ends of the channels with swarf abraded from the edge of the structured light redirecting film laminate. This method did not satisfactorily prevent the ingress of water into the channels of the laminate.

From the results in Table 2, we can conclude, for example, that if the paraffin wax used in example B is rubbed very quickly along the edge, the sealing may be incomplete or ineffective, or both. Similarly, it is possible to use a gel version of cyano acrylate of example AE which may not penetrate into the channels and achieve effective sealing. In general, it is desirable to use a method that is convenient, fast, effective, and environmentally friendly. The edge sealing in examples A through AJ has been deemed acceptable if water ingressed into the channels a distance of 5 mm or less according to the test described.

Figure 38 shows an example of a microstructured optical construction whose edge was not sealed prior to installation. The stain caused by the ingress of water can be seen by the clear (white) section.

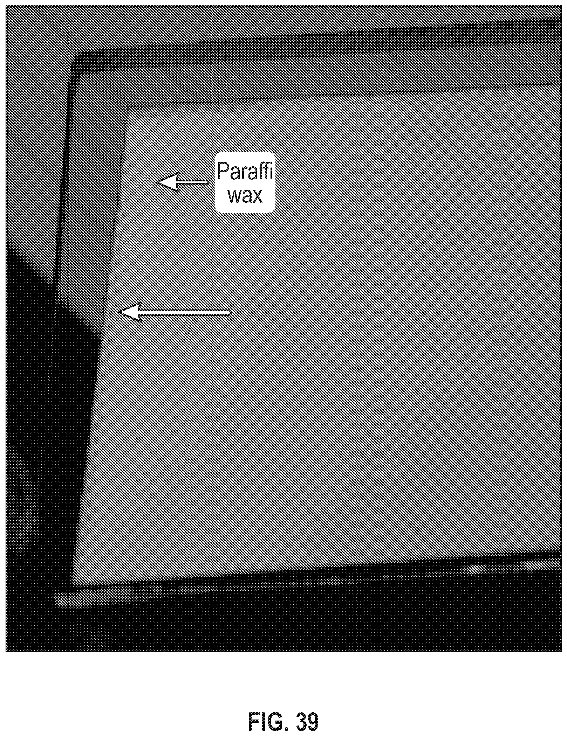

In contrast, Figure 39 shows an example of a microstructured optical construction with edge sealed and minimal water ingress. The arrow shows the level of water ingress.

**Claims**

1.  A method for reducing ingress of water into an edge of a light redirecting construction (1704) comprising:

    • providing a light redirecting construction (1700; 1800) having a first major surface and a second major surface opposite the first major surface, and
    • depositing a sealant (1806) on at least a portion of an edge of the light redirecting construction (1704), wherein the light redirecting construction (1700; 1800) comprises:

    ◦ a light redirecting film (1804) comprising a plurality of microstructured prismatic elements (131; 1808), having a first major surface (401) and a second major surface (402) opposite the first major surface (401)
    ◦ an adhesive layer (1522) comprising an adhesive, wherein the adhesive layer (1522) has a first major surface and a second major surface opposite the first major surface,
    ◦ a cover film (121; 1516; 1802) having a first major surface and a second major surface opposite the first major surface,
    wherein the microstructured prismatic elements (410) penetrate at least partially into the first major surface of the adhesive layer (1522),
    wherein the second major surface of the adhesive layer (1522) is immediately adjacent to the first major surface of the cover film (121; 1516; 1802)
    wherein the light redirecting construction (1700; 1800) has at least one channel defined by the volume enclosed between the surface of the microstructured prismatic elements (410; 1808) and the adhesive layer (1522)
    wherein the at least one channel extends from at least one edge of the light redirecting construction (1704) inwards,
    **characterized in that** the sealant (1806) is a wax and penetrates in the channel at most 5 mm.

2.  A method for reducing ingress of water according to claim 1, further comprising applying masking tape to one or more of the major surfaces of the light redirecting construction (1700; 1800) along the edge of the light redirecting construction (1704) before application of the sealant (1806) to the edge (1704), and further comprising removing the masking tape after the application of the sealant (1806) to the edge (1704).

3.  A method for reducing ingress of water according to claim 1, wherein the sealant (1806) reduces water ingress into the channel with respect to a light redirecting construction (1700; 1800) lacking the sealant (1806).

4.  A method for reducing ingress of water according to claim 1, wherein the sealant (1806) covers at least 99% of the cross sectional area of the channel.

5.  A method for reducing ingress of water according to claim 1, wherein the sealant (1806) has a melting point higher than 100°C.

6.  A method for reducing ingress of water according to claim 1, wherein the at least one channel extends from an edge of the light redirecting construction (1704) inwards for a length greater than 1 cm.

7.  A method for reducing ingress of water according to claim 1, wherein the microstructured prismatic elements (410; 1808) extend linearly along one dimension of the daylight redirecting construction (1700; 1800).

8.  A method for reducing ingress of water according to claim 1, wherein the adhesive layer (1522) of the daylight redirecting construction (1700; 1800) comprises a diffusing agent.

9.  A method for reducing ingress of water according to claim 1, wherein the sealant (1806) is solid at room temperature.

10. A method for reducing ingress of water according to claim 1, wherein the sealant (1806) is a wax chosen from bee's wax, paraffin wax, and wax-on.

11. A method for reducing ingress of water according to claim 1, wherein the light redirecting construction (1700; 1800) allows transmission of visible light.

**Patentansprüche**

1. Ein Verfahren zum Verringern des Eintretens von Wasser in einen Rand einer Lichtumleitungskonstruktion (1704), umfassend:

• Bereitstellen einer Lichtumleitungskonstruktion (1700; 1800) mit einer ersten Hauptfläche und einer zweiten Hauptfläche gegenüber der ersten Hauptfläche; und

• Deponieren eines Dichtungsmittels (1806) auf zumindest einem Abschnitt eines Randes der Lichtumleitungskonstruktion (1704),

wobei die Lichtumleitungskonstruktion (1700; 1800) umfasst:

◦ einen Lichtumleitungsfilm (1804), welcher eine Mehrzahl von mikrostrukturierten prismatischen Elementen (131; 1808) umfasst, mit einer ersten Hauptfläche (401) und einer zweiten Hauptfläche (402) gegenüber der ersten Hauptfläche (401),

◦ eine Klebstoffschicht (1522), welche einen Klebstoff umfasst, wobei die Klebstoffschicht (1522) eine erste Hauptfläche und eine zweite Hauptfläche gegenüber der ersten Hauptfläche aufweist,

◦ einen Deckfilm (121; 1516; 1802) mit einer ersten Hauptfläche und einer zweiten Hauptfläche gegenüber der ersten Hauptfläche,

wobei die mikrostrukturierten prismatischen Elemente (410) zumindest teilweise in die erste Hauptfläche der Klebstoffschicht (1522) eindringen,

wobei die zweite Hauptfläche der Klebstoffschicht (1522) unmittelbar an die erste Hauptfläche des Deckfilms (121; 1516; 1802) angrenzt,

wobei die Lichtumleitungskonstruktion (1700; 1800) mindestens einen Kanal aufweist, der durch das Volumen definiert ist, das zwischen der Fläche der mikrostrukturierten prismatischen Elemente (410; 1808) und der Klebstoffschicht (1522) eingeschlossen ist,

wobei sich der mindestens eine Kanal von mindestens einem Rand der Lichtumleitungskonstruktion (1704) nach innen erstreckt,

**dadurch gekennzeichnet, dass** das Dichtungsmittel (1806) ein Wachs ist und höchstens 5 mm in den Kanal eindringt.

2. Ein Verfahren zum Verringern des Eintretens von Wasser nach Anspruch 1, ferner umfassend das Aufbringen von Maskierungsband auf eine oder mehrere der Hauptflächen der Lichtumleitungskonstruktion (1700; 1800) entlang dem Rand der Lichtumleitungskonstruktion (1704) vor dem Aufbringen des Dichtungsmittels (1806) auf den Rand (1704) und ferner umfassend das Entfernen des Maskierungsbandes nach dem Aufbringen des Dichtungsmittels (1806) auf den Rand (1704).

3. Ein Verfahren zum Verringern des Eintretens von Wasser nach Anspruch 1, wobei das Dichtungsmittel (1806) das Eintreten von Wasser in den Kanal in Bezug auf eine Lichtumleitungskonstruktion (1700; 1800) verringert, der das Dichtungsmittel (1806) fehlt.

4. Ein Verfahren zum Verringern des Eintretens von Wasser nach Anspruch 1, wobei das Dichtungsmittel (1806) mindestens 99 % der Querschnittsfläche des Kanals bedeckt.

5. Ein Verfahren zum Verringern des Eintretens von Wasser nach Anspruch 1, wobei das Dichtungsmittel (1806) einen Schmelzpunkt aufweist, der höher als 100 °C ist.

6. Ein Verfahren zum Verringern des Eintretens von Wasser nach Anspruch 1, wobei sich der mindestens eine Kanal von einem Rand der Lichtumleitungskonstruktion (1704) über eine Länge von mehr als 1 cm nach innen erstreckt.

7. Ein Verfahren zum Verringern des Eintretens von Wasser nach Anspruch 1, wobei sich die mikrostrukturierten prismatischen Elemente (410; 1808) linear entlang einer Dimension der Tageslicht-Umleitungskonstruktion (1700; 1800) erstrecken.

8. Ein Verfahren zum Verringern des Eintretens von Wasser nach Anspruch 1, wobei die Klebstoffschicht (1522) der Tageslicht-Umleitungskonstruktion (1700; 1800) ein Streuungsmittel umfasst.

9. Ein Verfahren zum Verringern des Eintretens von Wasser nach Anspruch 1, wobei das Dichtungsmittel (1806) bei Raumtemperatur fest ist.

10. Ein Verfahren zum Verringern des Eintretens von Wasser nach Anspruch 1, wobei das Dichtungsmittel (1806) ein Wachs ist, das aus Bienenwachs, Paraffinwachs und Wax-on ausgewählt ist.

11. Ein Verfahren zum Verringern des Eintretens von Wasser nach Anspruch 1, wobei die Lichtumleitungskonstruktion (1700; 1800) Durchlassen von sichtbarem Licht ermöglicht.

**Revendications**

1. Procédé de réduction d'une infiltration d'eau dans un bord d'une construction de réorientation de lumière (1704) comprenant :

   • la fourniture d'une construction de réorientation de lumière (1700 ; 1800) ayant une première surface principale et une deuxième surface principale opposée à la première surface principale, et
   • le dépôt d'un mastic (1806) sur au moins une partie d'un bord de la construction de réorientation de lumière (1704),
   dans lequel la construction de réorientation de lumière (1700 ; 1800) comprend :

   ◦ un film de réorientation de lumière (1804) comprenant une pluralité d'éléments prismatiques microstructurés (131 ; 1808), ayant une première surface principale (401) et une deuxième surface principale (402) opposée à la première surface principale (401)
   ◦ une couche adhésive (1522) comprenant un adhésif, dans lequel la couche adhésive (1522) a une première surface principale et une deuxième surface principale opposée à la première surface principale,
   ◦ un film de couverture (121 ; 1516 ; 1802) ayant une première surface principale et une deuxième surface principale opposée à la première surface principale,

   dans lequel les éléments prismatiques microstructurés (410) pénètrent au moins partiellement dans la première surface principale de la couche adhésive (1522),
   dans lequel la deuxième surface principale de la couche adhésive (1522) est immédiatement adjacente à la première surface principale du film de couverture (121 ; 1516 ; 1802)
   dans lequel la construction de réorientation de lumière (1700 ; 1800) a au moins un canal défini par le volume enfermé entre la surface des éléments prismatiques microstructurés (410 ; 1808) et la couche adhésive (1522)
   dans lequel l'au moins un canal s'étend à partir d'au moins un bord de la construction de réorientation de lumière (1704) vers l'intérieur,
   **caractérisé en ce que** le mastic (1806) est une cire et pénètre dans le canal d'au plus 5 mm.

2. Procédé de réduction d'une infiltration d'eau selon la revendication 1, comprenant en outre l'application d'un ruban de masquage à l'une ou plusieurs des surfaces principales de la construction de réorientation de lumière (1700 ; 1800) le long du bord de la construction de réorientation de lumière (1704) avant application du mastic (1806) au bord (1704), et comprenant en outre l'enlèvement du ruban de masquage après l'application du mastic (1806) au bord (1704).

3. Procédé de réduction d'une infiltration d'eau selon la revendication 1, dans lequel le mastic (1806) réduit une infiltration d'eau dans le canal par rapport à une construction de réorientation de lumière (1700 ; 1800) dépourvue du mastic (1806).

4. Procédé de réduction d'une infiltration d'eau selon la revendication 1, dans lequel le mastic (1806) couvre au moins 99 % de l'aire en coupe transversale du canal.

5. Procédé de réduction d'une infiltration d'eau selon la revendication 1, dans lequel le mastic (1806) a un point de fusion supérieur à 100 °C.

6. Procédé de réduction d'une infiltration d'eau selon la revendication 1, dans lequel l'au moins un canal s'étend à partir d'un bord de la construction de réorientation de lumière (1704) vers l'intérieur sur une longueur supérieure à 1 cm.

7. Procédé de réduction d'une infiltration d'eau selon la revendication 1, dans lequel les éléments prismatiques microstructurés (410 ; 1808) s'étendent linéairement le long d'une dimension de la construction de réorientation de lumière du jour (1700 ; 1800).

8. Procédé de réduction d'une infiltration d'eau selon la revendication 1, dans lequel la couche adhésive (1522) de la construction de réorientation de lumière du jour (1700 ; 1800) comprend un agent de diffusion.

9. Procédé de réduction d'une infiltration d'eau selon la revendication 1, dans lequel le mastic (1806) est solide à la température ambiante.

10. Procédé de réduction d'une infiltration d'eau selon la revendication 1, dans lequel le mastic (1806) est une cire choisie parmi la cire d'abeilles, la cire de paraffine, et du Wax-on.

11. Procédé de réduction d'une infiltration d'eau selon la revendication 1, dans lequel la construction de réorientation de lumière (1700 ; 1800) permet la transmission de lumière visible.

FIG. 1

FIG. 2

**FIG. 3**

**FIG. 4**

FIG. 5

FIG. 6

A= Pitch
B= Height
Aspect Radio= B/A= 1.23

FIG. 6A

FIG. 7

FIG. 8

FIG. 9

FIG. 10

Tip Penetration Points

Adhesive

Microstructure

FIG. 11

Tip Penetration Points

Cover Film

Adhesive

m  n  o  p

f

$y_1$

e

g

$y_2$

h

**FIG. 12**

Microstructued
Prismatic Film

Incoming Ligth

Cover
Film

Punch
Through

Immersed
Tip

Botton
Facet

Redirected
Light

Air
Chanel

Adhesive
Resin

Primer
Layer

**FIG. 13**

FIG. 14A

FIG. 14B

FIG. 15

FIG. 16

FIG. 17

Incoming Light

Top

Redirected Light

2.35

Bottom

Adhesive

up

Tip Immersion

3.93

**FIG. 18**

0.44

4.00

**FIG. 19A**

**FIG. 19B**

Edge Seal

Redirecting Construction

**FIG. 20**

126  121  124  127  127  130  131
123  125  129  129  123  122  122

**FIG. 21**

FIG. 22

FIG. 23

FIG. 24

FIG. 25

5 4 3　　2 1

6

7

1. Diffuser Coating(Microreplicated)
2. PET Film
3. Prism
4. Adhesive Coating
5. Cover Film
6. Incoming Light
7. Redirected Light

**FIG. 26**

5 4 3　　2 1

1. Diffuser Coating with Beads or
   Film with Beads for Diffusion
2. PET Film
3. Prism
4. Adhesive Coating
5. Cover Film

**FIG. 27**

1. Diffuser Coating(Optional)
   or Hardcoat (Optional)
2. PET Film
3. Prism
4. Adhesive Coating with Beads
   (for Diffusion)
5. Cover Film

**FIG. 28**

1. Diffuser
2. Cover Film
3. Adhesive Coating
4. Prism
5. Pet Film
6. Adhesive (PSA)
7. Glass (or Glazing)
   or Release Liner
8. Incoming Light
9. Redirected Light

**FIG. 29A**

7 6 5 4 3 2 1

8

9

1. Diffuser
2. PET Film
3. Prism
4. Adhesive Coating
5. Cover Film
6. Adhesive (PSA)
7. Glass (or Glazing)
   or Release Liner
8. Incoming Light
9. Redirected Light

**FIG. 29B**

7 6 5 4 3 2 1

1. Diffuser Coating
2. PET Film
3. Prism
4. Adhesive Coating with
   Beads (for Diffusion)
5. Cover Film
6. Adhesive (PSA)
7. Glass (or Glazing)
   or Release Liner

**FIG. 30**

1. Diffusing Film (Bulk Diffuser)
2. Prism
3. Adhesive Coating
4. Cover Film

FIG. 31

1. Diffusing Film (Bulk Diffuser)
2. Prism
3. Adhesive Coating
4. Cover Film
5. Incoming Light
6. Scattered Light, Transmitted and Backscattered

FIG. 32

## Compare Adhesive Thickness

**FIG. 33**

## Punch Through Glare vs Tip Immersion Point

**FIG. 34**

## CIE 1976 UCS Chromaticity Diagram

FIG. 35

FIG. 36

**EP 3 491 432 B1**

**FIG. 37**

**FIG. 38**

63

FIG. 39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016064595A1 PCT
- WO 2016088823A1 PCT
- WO 2016064667 PCT
- WO 2016064621 PCT
- US 62336726
- US 20080291541 A
- US 61287360
- US 61287354 B
- WO 2012134787 PCT
- US 5551042 A
- US 20140211331 A
- WO 2014147793A1 PCT
- US 8040610 B
- US 8107164 B
- US 8664521 B
- US 20140198390 A
- US 20080292820 A
- US 6456437 B
- US 20140104689 A
- WO 2014093119 PCT
- US 6288172 B
- WO 2013158475 PCT
- US 20150293272 A, Pham
- US 20130236697 A, Walker
- WO 2015050750 PCT
- WO 2015020750 PCT
- US 6778240 B
- US 7190525 B
- US 6049419 A
- US 5223465 A
- US 5882774 A
- US RE34605 E
- US 5579162 A
- US 5360659 A
- US 5763049 A
- US 20090041553 A
- US 62094626
- US 62094626 B
- US 8657472 B
- US 62066302
- WO 20164621 A1

**Non-patent literature cited in the description**

- *CHEMICAL ABSTRACTS,* 7652-64-4